# EUROPEAN PATENT APPLICATION

(11) **EP 4 340 536 A1**
(43) Date of publication of application: **20.03.2024**
(21) Application number: 21942023.9
(22) Date of filing: 27.12.2021
(51) Int. Cl.: H04W 92/04, H04W 88/08

(54) **CONTROL DEVICE AND CONTROL METHOD, AND DEVICE AND PROCESSING METHOD**

(30) Priority: 10.05.2021 JP 2021080070
(71) Applicant: Sony Group Corporation, Tokyo 108-0075 (JP)
(72) Inventor: TSUDA, Shinichiro, Tokyo 108-0075 (JP); MATSUDA, Hiroki, Tokyo 108-0075 (JP)
(74) Representative: Witte, Weller & Partner Patentanwälte mbB
(86) International application number: PCT/JP2021/048714
(87) International publication number: WO 2022/239295

(57) **Abstract**

Provided a control device that performs control such that processing necessary in a base station is distributed among a plurality of devices.

A control device includes: a determination unit that determines a type of data to be transmitted to and received from a terminal device; a processing selection unit that selects, for each device, one or more kinds of processing to be executed by each device of two or more devices from among a plurality of kinds of processing necessary for operating as a base station on the basis of the determined type of the data; and a processing setting unit that sets each device of the two or more devices such that each device of the two or more devices is able to execute, on the received data, the one or more kinds of processing selected on the basis of the type of the data.

## Description

### TECHNICAL FIELD

The technology (hereinafter, "the present disclosure") disclosed in this specification relates to a control device and a control method for controlling an operation of a base station in a wireless network, and a device operating as the base station in the wireless network and a processing method executed in the device operating as the base station.

### BACKGROUND ART

The first standard of the 5th generation mobile communication system, so-called 5G, having characteristics of high speed and large capacity (eMBB: enhanced mobile broadband), low latency and high reliability (URLLC: Ultra-Reliable and Low Latency Communications), and multi-user simultaneous connection (mMTC: massive machine type communication) was formulated as Rel-15 in 2018, and a service compatible with 5G was started in Japan in March 2020. In 5G, it is expected to use a millimeter wave band in which a broadband frequency band can be easily secured in order to realize ultra-high speed.

However, since the millimeter wave band has high radio wave straightness and a large propagation loss, there are problems such as utilization of beamforming for compensating the propagation loss and necessity of more densely installing base stations.

For example, in a wireless communication network based on a centralized radio access network (C-RAN), there has been proposed a wireless communication system that switches function sharing between a baseband unit (BBU) and a remote antenna unit (RAU) in consideration of a processing load of the RAU and communication quality affecting a transmission speed between a terminal device and a fronthaul (see Patent Document 1). In the future, it is desired to introduce control, such as high speed/large capacity communication, low latency/high reliability communication, and multi-simultaneous connection communication, in which processing necessary in the base station is dynamically and optimally distributed among a plurality of devices according to a type of data having greatly different characteristics requested for wireless communication and a state of the terminal device.

### CITATION LIST

### PATENT DOCUMENT

PATENT DOCUMENT 1: Japanese Patent Application Laid-Open No. 2017-163493

### SUMMARY OF THE INVENTION

### PROBLEMS TO BE SOLVED BY THE INVENTION

An object of the present disclosure is to provide a control device and a control method for performing control such that processing necessary in a base station in a wireless network is distributed among a plurality of devices, and a device operating as the base station among a plurality of devices in the wireless network and a processing method executed in the device operating as the base station.

### SOLUTIONS TO PROBLEMS

The present disclosure has been made in view of the above problems, and a first aspect thereof is a control device including:
a determination unit that determines a type of data to be transmitted to and received from a terminal device;
a processing selection unit that selects, for each device, one or more kinds of processing to be executed by each device of two or more devices from among a plurality of kinds of processing necessary for operating as a base station on the basis of the determined type of the data; and
a processing setting unit that sets each device of the two or more devices such that each device of the two or more devices is able to execute, on the received data, the one or more kinds of processing selected on the basis of the type of the data.

The processing setting unit sets processing necessary for operating as a central unit (CU) in a first device among the two or more devices, and sets processing necessary for operating as a distributed unit (DU) in a second device other than the first device among the two or more devices. The processing setting unit further sets processing necessary for operating as a radio unit (RU) in the second device.

The processing selection unit selects, on the basis of the determined type of the data, one or more kinds of first processing to be executed by the first device from among the processing necessary for operating as the CU and one or more kinds of second processing to be executed by the second device from among the processing necessary for operating as the DU.

Furthermore, a second aspect of the present disclosure is a device that operates as a base station, including:
an acquisition unit that acquires, from a control device, information regarding setting of a plurality of kinds of processing necessary for operating as the base station, and acquires control information and data generated by a device of a core network that processes user plane data;
a processing setting unit that sets the plurality of kinds of processing on the basis of the information regarding the setting of the plurality of kinds of processing necessary for operating as the base station; and
a processing selection unit that selects, on the basis of the control information, processing to be executed on the data from among the plurality of kinds of processing set by the processing setting unit.

The processing setting unit sets processing necessary for the device according to the second aspect to operate as a CU, a DU, or an RU.

Furthermore, a third aspect of the present disclosure is a control method for causing two or more devices to operate as a base station, the control method including:
a determination step of determining a type of data to be transmitted to and received from a terminal device;
a process selection step of selecting, for each device, one or more kinds of processing to be executed by each device of the two or more devices from among a plurality of kinds of processing necessary for operating as the base station on the basis of the determined type of the data; and
a process setting step of setting each device of the two or more devices such that each device of the two or more devices is able to execute, on the received data, the one or more kinds of processing selected on the basis of the type of the data.

Furthermore, a fourth aspect of the present disclosure is a processing method which is executed in a device operating as a base station, the method including:
an acquisition step of acquiring, from a control device, information regarding setting of a plurality of kinds of processing necessary for operating as the base station, and acquires control information and data generated by a device of a core network that processes user plane data;
a process setting step of setting the plurality of kinds of processing on the basis of the information regarding the setting of the plurality of kinds of processing necessary for operating as the base station; and
a process selection step of selecting, on the basis of the control information, processing to be executed by the device on the data from among the plurality of kinds of processing set by the process setting step.

### EFFECTS OF THE INVENTION

According to the present disclosure, it is possible to provide the control device and the control method that dynamically change processing, which is necessary in the base station, to be executed in a distributed manner by two or more devices and change a function or service to be distributed to each device according to a type of data to be transmitted to and received from the terminal device, and the device operating as the base station among a plurality of devices in a wireless network and the processing method that performs distribution processing of the processing necessary in the base station in the device operating as the base station.

Note that the effects described herein are merely examples, and the effects brought about by the present disclosure are not limited thereto. Furthermore, the present disclosure may further provide additional effects in addition to the effects described above.

Still other objects, features, and advantages of the present disclosure will become apparent from a more detailed description based on embodiments as described later and the accompanying drawings.

### BRIEF DESCRIPTION OF DRAWINGS

Fig. 1 is a diagram illustrating each option of function division of a central unit (CU) and a distributed unit (DU).
Fig. 2 is a diagram illustrating a configuration example of a wireless communication system 100.
Fig. 3 is a diagram illustrating a first configuration example of a base station device 20.
Fig. 4 is a diagram illustrating a second configuration example of the base station device 20.
Fig. 5 is a diagram illustrating a third configuration example of the base station device 20.
Fig. 6 is a diagram illustrating a configuration of a network architecture of a 5G system (5GS).
Fig. 7 is a diagram illustrating a configuration example of a wireless communication system 200.
Fig. 8 is a diagram illustrating a configuration of an information processing device 50.
Fig. 9 is a diagram illustrating a configuration of an RU-mounted device 60.
Fig. 10 is a diagram illustrating a configuration of a terminal device 40.
Fig. 11 is a diagram illustrating an example of identifying processing in units of sublayers.
Fig. 12 is a diagram illustrating another example of identifying the processing in units of sublayers.
Fig. 13 is a diagram illustrating an example of identifying the processing in units of functions or services.
Fig. 14 is a diagram illustrating another example of identifying the processing in units of functions or services.
Fig. 15 is a diagram illustrating an example of a correspondence relationship between the device and second identification information.
Fig. 16 is a diagram illustrating an example of a sequence set by an F1 interface.
Fig. 17 is a diagram illustrating an example of a sequence for setting functions of an RU, a DU, and a CU.
Fig. 18 is a flowchart illustrating an example of control of distribution processing according to a type of communication service in the control device 10.
Fig. 19 is a flowchart (continuation of Fig. 18) illustrating the example of the control of the distribution processing according to the type of communication service in the control device 10.
Fig. 20 is a flowchart (continuation of Fig. 19) illustrating the example of the control of the distribution processing according to the type of communication service in the control device 10.
Fig. 21 is a diagram illustrating an example of a data format.
Fig. 22 is a diagram illustrating another example of a configuration of a control information section.
Fig. 23 is a diagram illustrating an example of a data processing sequence for distribution control by the control device 10.
Fig. 24 is a flowchart illustrating an example of a processing procedure in the RU-mounted device 60.
Fig. 25 is a diagram illustrating another example of the data processing sequence for the distribution control by the control device 10.
Fig. 26 is a flowchart illustrating another example of the processing procedure in the RU-mounted device 60.
Fig. 27 is a diagram illustrating still another example of the data processing sequence for the distribution control by the control device 10.

### MODE FOR CARRYING OUT THE INVENTION

Hereinafter, the present disclosure will be described in the following order with reference to the drawings.

A. Overview
B. Configuration of first wireless communication system
C. Network architecture of 5GS
D. Configuration of second wireless communication system
E. Configuration of information processing device
F. Configuration of RU-mounted device
G. Configuration of terminal device
H. Method of identifying functions or services of each sublayer
I. Method of identifying device to be subjected to distribution processing
J. Procedure of setting functions or services necessary for operating as CU, DU, or RU
K. distribution control method according to type of user plane data
L. Data Format
M. Procedure 1 of data processing for distribution control by control device
N. Procedure 2 of data processing for distribution control by control device
O. Procedure 3 of data processing for distribution control by control device
P. Notification method of setting for distribution control by control device
Q. distribution control according to setting of PHY sublayer
R. Effects

### A. Overview

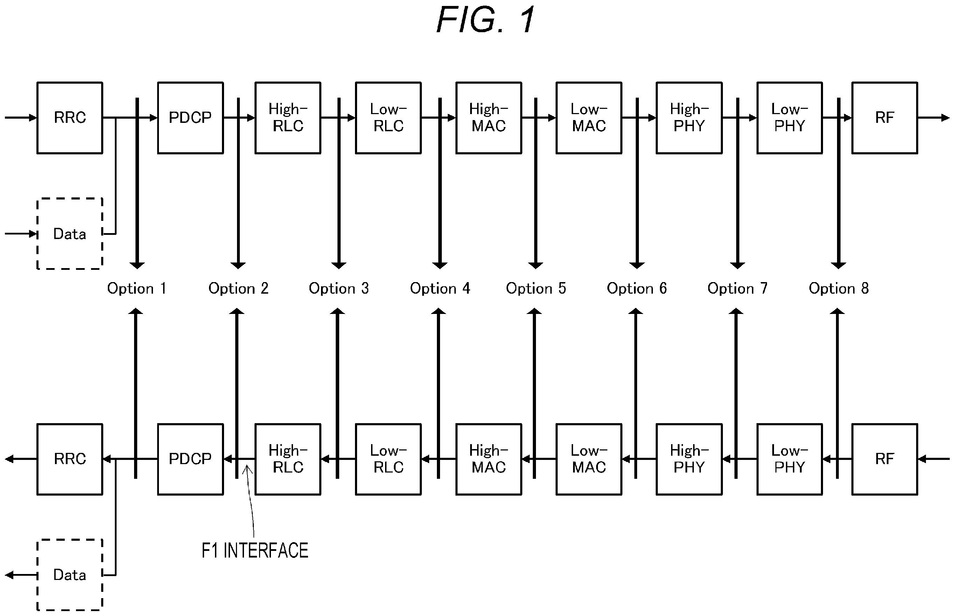

Fig. 1 illustrates each option of function division of a central unit (CU) and a distributed unit (DU) excerpted from 3GPP TR38.801 "Study on new radio access technology: Radio access architecture and interfaces" and discussed in 5G.

In 4G, a configuration is defined in which Option 8 using a CPRI/OBSAI protocol is adopted, and division is made into a remote radio head (RRH) which processes a radio frequency (RF) and a BBU which processes other L1/L2/L3 functions. Since a transmission speed proportional to the number of antenna ports and a channel bandwidth is required for a fronthaul connecting the BBU and the RRH, introduction of a division option capable of relaxing the transmission speed has been required in 5G. In this regard, in 5G, a configuration in which division is made into a DU which processes L2/L1 functions equal to or lower than a radio link control (RLC) sublayer and a CU which processes L2/L3 functions equal to or higher than a packet data convergence protocol (PDCP) sublayer, that is, an F1 interface based on Option 2 is defined.

5G supports three types of communication forms having greatly different properties, such as eMBB, URLLC, and mMTC. After B5G (Beyond 5G), it is assumed that demand for support for other communication forms having such different properties increases more and more, and introduction of an adaptive communication processing mechanism according to each communication form is desired. Furthermore, depending on the communication form, an operation of dynamically controlling the division of functions other than Option 2 may be considered.

### B. Configuration of first wireless communication system

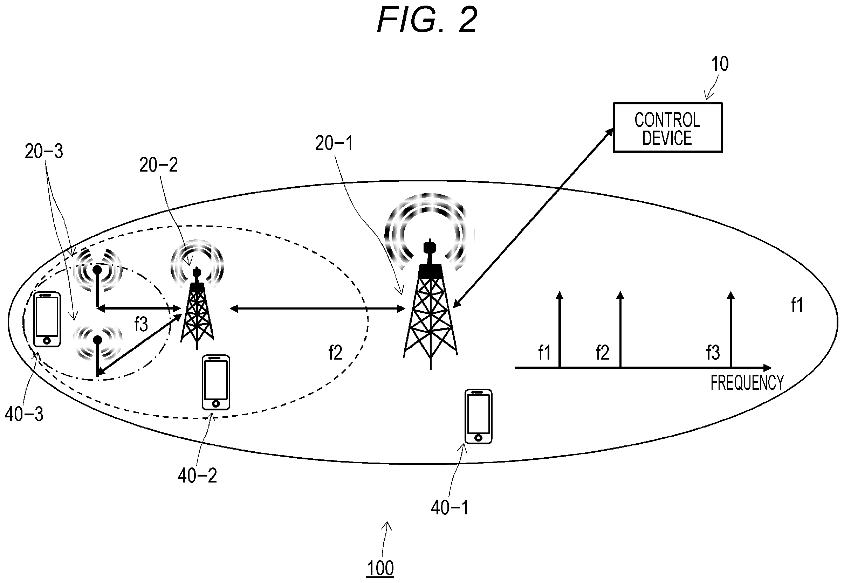

Fig. 2 illustrates a configuration example of a wireless communication system 100. The wireless communication system 100 includes a control device 10, a base station device 20, and a terminal device 40. In a case where it is not necessary to distinguish a plurality of base station devices 20, the base station devices are denoted as a base station device 20, and in a case where it is necessary to distinguish the plurality of base station devices, the base station devices are denoted with hyphens and serial numbers, for example, a base station device 20-1 and a base station device 20-2. Furthermore, in a case where it is not necessary to distinguish a plurality of terminal devices 40, the terminal devices are denoted as a terminal device 40, and in a case where it is necessary to distinguish the plurality of terminal devices, the terminal devices are denoted with hyphens and serial numbers, for example, a terminal device 40-1 and a terminal device 40-2.

The control device 10 controls the base station device 20 and controls the terminal device 40 via the base station device 20. The control device 10 is configured as, for example, a part or all of functions of a core network. The core network described herein is, for example, an evolved packet core (EPC), a 5G core (5GC), or a next generation core (NGC).

The base station device 20-1 operates as a basic coverage cell at an operation frequency f1, and provides the terminal device 40 with coverage of a wireless communication service on the frequency f1. The operation frequency f1 is, for example, a frequency in an 800 MHz band called a platinum band, 1.7 GHz, 1.8 GHz, or 2 GHz band. The base station device 20-1 can operate as a gNB (next generation NodeB) on the frequency f1 (a first configuration example of the base station device). Furthermore, the base station device 20-1 is connected to the base station device 20-2 and a base station device 20-3 via an Fx interface, and can operate as the CU for the base station device 20-2 and the base station device 20-3. The Fx interface is an interface corresponding to each division option, including the F1 interface of Option 2 illustrated in Fig. 1.

The base station device 20-2 operates as a capacity boost cell at an operation frequency f2, and provides the terminal device 40-2 and a terminal device 40-3 with the coverage of the wireless communication service on the frequency f2. The operation frequency f2 is a frequency in a frequency band higher than f1, for example, a band called a sub-6 GHz band assigned for 5G in Japan. The base station device 20-2 is connected to the base station device 20-1 operating as the CU via the Fx interface, and can operate as the DU on the frequency f2 (a second configuration example of the base station device).

The base station device 20-3 operates as a capacity boost cell at an operation frequency f3 and provides the terminal device 40-3 with the coverage of the wireless communication service on the frequency f3. The operation frequency f3 is a frequency in a frequency band higher than f2, for example, a millimeter wave band. The base station device 20-3 is connected to the base station device 20-1 operating as the CU via the Fx interface, and can operate as the DU on the frequency f3. Furthermore, the base station device 20-3 is connected to the base station device 20-2 operating as the DU via the Fx interface, and can operate as a radio unit (RU) on the frequency f3 (a third configuration example of the base station device).

Note that, since the coverage of the base station device 20-3 operating at the frequency f3 is narrower than the coverage of the base station device 20-1 and the base station device 20-2, the base station device 20-3 operates as a device close to user equipment (UE) to be described later. On the other hand, since the coverage of the base station device 20-1 operating at the frequency f1 is wider than the coverage of the base station device 20-2 and the base station device 20-3, the base station device 20-1 operates as a device close to the core network to be described later.

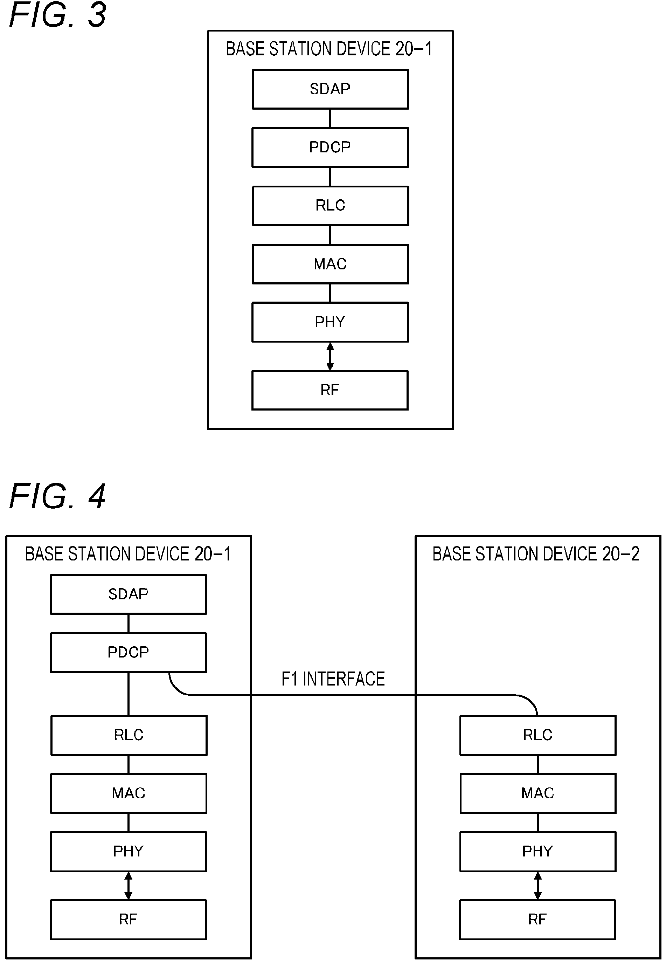

Fig. 3 illustrates the first configuration example of the base station device 20. The base station device 20-1 includes, as a protocol stack for processing a user plane (U-plane), each sublayer of a service data adaptation protocol (SDAP), a packet data convergence protocol (PDCP), a radio link control (RLC), a media access control (MAC), and a PHYsical (PHY), and a radio frequency (RF) for performing signal processing in a wireless frequency. That is, the base station device 20-1 includes all functions of the CU, the DU, and further the RU in the gNB.

The SDAP provides a quality of service (QoS) flow to the 5GC, and processes functions or services such as mapping of QoS flows and data radio bearers (DRB), and marking of a QoS flow identifier (QFI) for a packet of downlink (DL) and uplink (UL).

The PDCP provides a radio bearer to the SDAP, and processes functions or services such as transfer of user plane data or control plane data, management of PDCP sequence numbers (SN), ciphering and deciphering, integrity protection and integrity verification, discarding of a service data unit (SDU) based on a timer, routing of a split bearer, data duplication, and duplicate discarding.

The RLC provides an RLC channel to the PDCP, and processes functions or services such as transfer of a protocol data unit (PDU) of an upper layer, assignment of independent sequence numbers of an unacknowledged mode (UM) and an acknowledged mode (AM) to the PDCP, error correction through an automatic repeat request (ARQ) in the AM, segmentation of the RLC SDU in the UM and the AM, re-segmentation in the AM, reassembly of the SDU in the UM and the AM, detection of data duplication in the AM, discarding of the SDU in the UM and the AM, reconstruction of the RLC, and protocol error detection in the AM.

The MAC provides a logical channel to the RLC and processes functions or services such as mapping of logical channels and transport channels, error correction via Hybrid ARQ (HARQ), control of priority between UEs by dynamic scheduling, control of priority between UEs by logical channel prioritization, and control of priority between overlapping resources in the UE. Here, the logical channel is defined by a type of information to be carried, and is classified into a control channel and a traffic channel.

The PHY provides a transport channel to the MAC and processes functions or services such as indication of cyclic redundancy check (CRC) and transport block errors, forward error correction (FEC) and rate matching, data modulation, mapping to physical resources, multi-antenna processing, and support for L1 control and HARQ related signaling. The transport channel described herein is defined in terms of how or with what characteristics information is transferred on a wireless interface.

Fig. 4 illustrates the second configuration example of the base station device 20. As illustrated in Fig. 3, the base station device 20-1 can operate as the gNB alone, and can also operate as the CU that processes functions or services of SDAP and PDCP with respect to the base station device 20-2 that operates as the DU. On the other hand, the base station device 20-2 includes each sublayer of the RLC, the MAC, and the PHY, and an RF that performs signal processing in the wireless frequency, and can operate as the DU. The PDCP of the base station device 20-1 that also operates as the CU and the RLC of the base station device 20-2 that operates as the DU are connected via the F1 interface. The F1 interface is connected by, for example, an optical fronthaul. Furthermore, the F1 interface may be realized by a wireless fronthaul.

The PDCP of the base station device 20-1 can provide a communication service to the terminal device 40-1 via a bearer processed in a lower sublayer (RLC, MAC, PHY) of the base station device 20-1.

Furthermore, the PDCP of the base station device 20-1 constructs a split bearer as a mobility anchor, and configures a first split bearer processed in a lower sublayer (RLC, MAC, PHY) of the base station device 20-1 and a second split bearer processed in a lower sublayer (RLC, MAC, PHY) of the base station device 20-2. The terminal device 40-2 can set dual connectivity (DC) with the base station device 20-1 as a master node (MN) and the base station device 20-2 as a secondary node (SN) and receive a communication service via the first split bearer and the second split bearer.

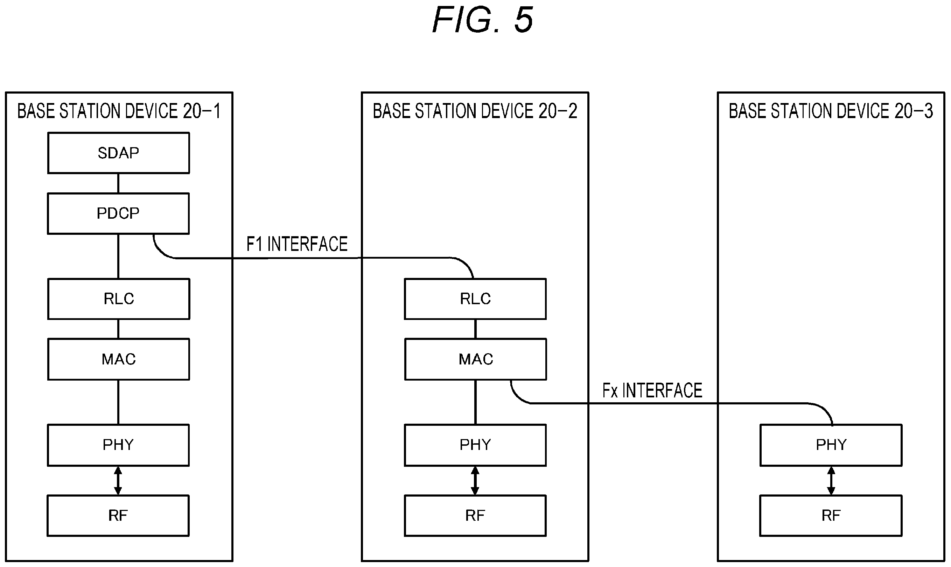

Fig. 5 illustrates the third configuration example of the base station device 20. The base station device 20-2 can operate as the DU alone as illustrated in Fig. 4, but can also operate as a part of the DU that processes functions or services of the RLC and the MAC with respect to the base station device 20-3 operating as the RU. The base station device 20-3 includes the sublayer of the PHY and the RF that performs signal processing in the wireless frequency, and can operate as the RU. The MAC of the base station device 20-2 that also operates as a part of the DU and the PHY of the base station device 20-3 that operates as the RU are connected via the Fx interface. This Fx interface is connected by, for example, an optical fronthaul. Furthermore, this Fx interface may be realized by a wireless fronthaul.

The PDCP of the base station device 20-1 constructs a split bearer as the mobility anchor, and configures the first split bearer processed in the lower sublayer (RLC, MAC, PHY) of the base station device 20-1 and the second split bearer processed in the lower sublayer (RLC, MAC) of the base station device 20-2 and the lower sublayer (PHY) of the base station device 20-3. The terminal device 40-3 can set the DC with the base station device 20-1 as the MN and the base station device 20-3 as the SN, and receive a communication service via the first split bearer and the second split bearer.

Furthermore, in a case where the RF of the base station device 20-2 and the RF of the base station device 20-3 support the same frequency band, the MAC of the base station device 20-2 that operates as a part of the DU may control joint transmission/reception of the base station device 20-2 and the base station device 20-3 to the terminal device 40-3.

A configuration example in which each sublayer of the protocol stack configuring the user plane of the base station is distributed to a plurality of devices and processed has been described above. The examples illustrated in Figs. 3 to 5 are examples, and it goes without saying that variations based on other division options are possible. Furthermore, the control to perform distribution to the plurality of devices is not limited to being performed statically, and may be performed dynamically. Moreover, a target of distribution control is not limited to a unit of sublayers, and may be a unit of various functions or services configuring the sublayer. By realizing a configuration in which the functions or services of the base station are distributed to a plurality of devices, not a device that supports full functions but a compact and inexpensive device that implements only limited functions or services of the lower layer can be configured with respect to the problem that base station devices that support the millimeter wave band in which a broadband frequency band is easily secured need to be densely installed.

### C. Network architecture of 5GS

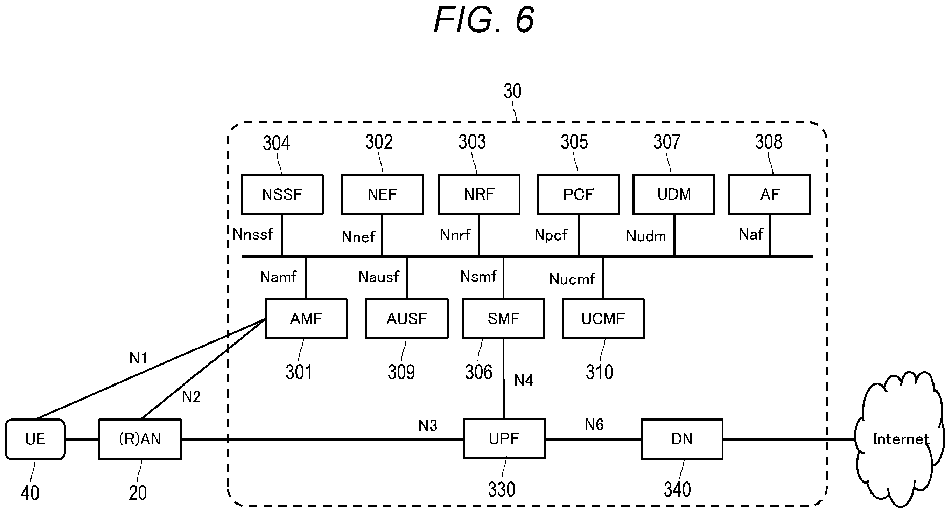

Fig. 6 illustrates a configuration of a network architecture of a 5G system (5GS). The 5GS includes a UE 40, a radio access network/access network ((R)AN) 20, and a core network 30. Here, the UE 40 corresponds to the terminal device 40. An (R)AN 20 is a network function (NF) corresponding to the base station device 20. Furthermore, the control device 10 may be the core network 30, or may be one of the network functions of the core network 30, for example, an AMF 301 to be described later. Furthermore, the control device 10 may be a device that manages operation, administration and maintenance (OAM), and may control the base station device 20 via the network function of the core network 30.

A function group of a control plane includes a plurality of NFs including an access and mobility management function (AMF) 301, a network exposure function (NEF) 302, a network repository function (NRF) 303, a network slice selection function (NSSF) 304, a policy control function (PCF) 305, a session management function (SMF) 306, a unified data management (UDM) 307, an application function (AF) 308, an authentication server function (AUSF) 309, and a UE radio capability management function (UCMF) 310.

The UDM 307 includes a unified data repository (UDR) that holds and manages subscriber information and a front end (FE) that processes the subscriber information. Furthermore, the AMF 301 performs mobility management. The SMF 306 performs session management. The UCMF 310 holds UE radio capability information corresponding to all UE radio capability IDs in a Public Land Mobile Network (PLMN). The UCMF 310 is responsible for assigning each PLMN-assigned UE radio capability ID.

Here, Namf is a service-based interface provided by the AMF 301, Nsmf is a service-based interface provided by the SMF 306, Nnef is a service-based interface provided by the NEF 302, Npcf is a service-based interface provided by the PCF 305, Nudm is a service-based interface provided by the UDM 307, Naf is a service-based interface provided by the AF 308, Nnrf is a service-based interface provided by the NRF 303, Nnssf is a service-based interface provided by the NSSF 304, and Nausf is a service-based interface provided by the AUSF 309. Each NF exchanges information with another NF via each service-based interface.

Furthermore, a user plane function (UPF) 330 has a function of user plane processing. The Data Network (DN) 340 has a function of enabling connection to a service unique to a mobile network operator (MNO), the Internet, or a third-party service.

The (R)AN 20 has a function of enabling connection to the radio access network (RAN) and connection to the access network (AN) other than the RAN. The (R)AN 20 includes the base station device 20 called a gNB or an ng-eNB. The RAN may be referred to as next generation (NG)-RAN.

Information is exchanged between the UE 40 and the AMF 301 via a reference point N1. Information is exchanged between the (R)AN 20 and the AMF 301 via a reference point N2. Information is exchanged between the (R)AN 20 and the UPF 330 via a reference point N3. Information is exchanged between the SMF 306 and the UPF 330 via a reference point N4.

### D. Configuration of second wireless communication system

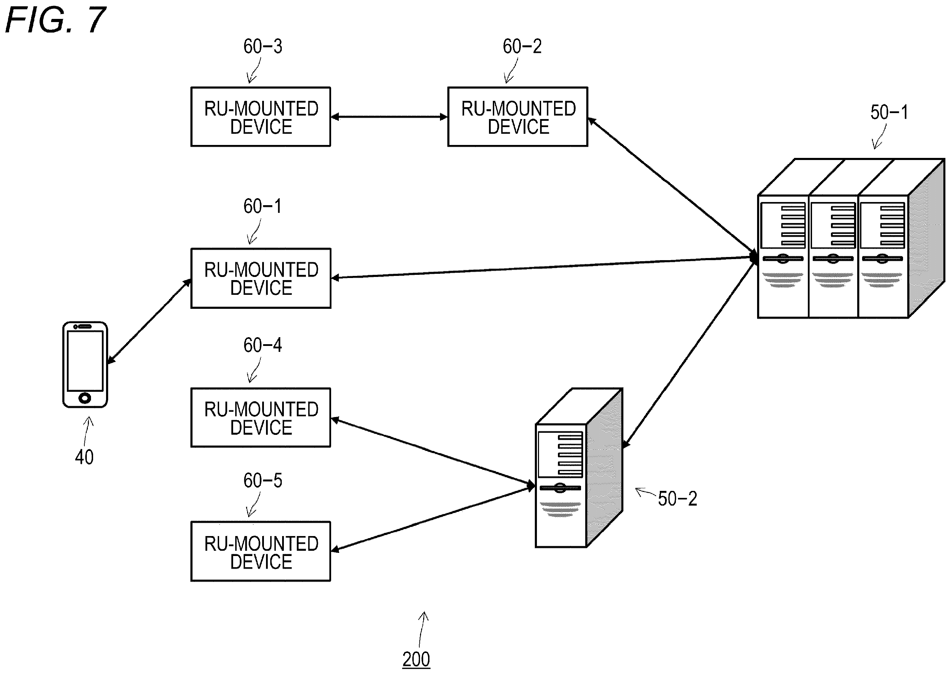

Fig. 7 illustrates a configuration example of a wireless communication system 200. The wireless communication system 200 includes an information processing device 50, an RU-mounted device 60, and the terminal device 40. In a case where it is not necessary to distinguish a plurality of information processing devices 50, the information processing devices are denoted as the information processing device 50, and in a case where it is necessary to distinguish the plurality of information processing devices, the information processing devices are denoted with hyphens and serial numbers, for example, an information processing device 50-1 and an information processing device 50-2. Furthermore, in a case where it is not necessary to distinguish a plurality of RU-mounted devices 60, the devices are denoted as the RU-mounted device 60, and in a case where it is necessary to distinguish the plurality of RU-mounted devices, the RU-mounted devices are denoted with hyphens and serial numbers, for example, an RU-mounted device 60-1 and an RU-mounted device 60-2.

The information processing device 50-1 is, for example, a cloud server or a server installed in a data center. The information processing device 50-1 operates as the control device 10. The control device 10 is configured as, for example, a part or all of functions of the core network 30.

The information processing device 50-2 is, for example, a device called an edge server. The information processing device 50-1 operating as the control device 10 can statically or dynamically implement some or all of functions of the CU and further the DU in the information processing device 50-2. This dynamic implementation is realized, for example, by utilizing a technology of virtualization or container technology. The virtualization described herein is a technology that is started by a hypervisor and constructs an execution environment independent of a host operating system (OS) by installing a guest OS or an application in a virtual environment. Furthermore, the container described herein is a technology of constructing an independent execution environment by isolating or restricting resources of the host OS as a process dedicated to the container and changing an attribute of a resource secured when an application is executed on the container.

The RU-mounted device 60 can operate as the base station device 20 by one device (RU-mounted device 60-1) or a plurality of devices (the RU-mounted device 60-2 and an RU-mounted device 60-3, or the information processing device 50-2 and an RU-mounted device 60-4). Here, the information processing device 50-1 operating as the control device 10 can statically or dynamically implement some or all of functions of the CU and the DU in the RU-mounted device 60. This dynamic implementation is realized, for example, by utilizing the above-described technology of virtualization or container.

### E. Configuration of information processing device

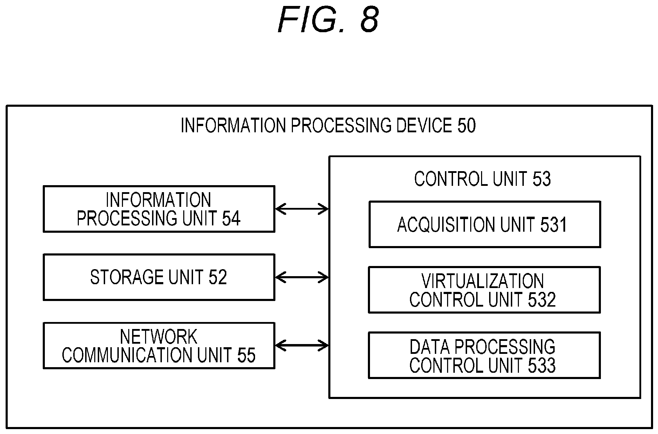

Fig. 8 illustrates a configuration of the information processing device 50. The information processing device 50 operates as, for example, the control device 10, and statically or dynamically implements some or all of the functions of the CU and the DU in the RU-mounted device 60.

The information processing device 50 illustrated in Fig. 8 includes a storage unit 52, a control unit 53, an information processing unit 54, and a network communication unit 55. Note that Fig. 8 illustrates a functional configuration of the information processing device 50, and an actual hardware configuration of the information processing device 50 may be different from that in Fig. 8, for example, in including functional modules other than those illustrated.

The storage unit 52 functions as a storage means of the information processing device 50. Specifically, the storage unit 52 includes a storage device, which is capable of reading and writing data, such as a dynamic random access memory (DRAM), a static RAM (SRAM), a flash memory, a hard disc drive (HDD), or a solid state drive (SSD) .

The control unit 53 is a controller that integrally controls each unit in the information processing device 50, and includes a processor such as a central processing unit (CPU) or a micro processing unit (MPU). For example, the control unit 53 is realized by the processor executing various programs stored in the storage unit 52 such as an HDD and an SSD using a random access memory (RAM) or the like as a work area. Note that the control unit 53 may include an integrated circuit such as an application specific integrated circuit (ASIC) and a field programmable gate array (FPGA). Any of the CPU, the MPU, the ASIC, and the FPGA can be regarded as the controller. Furthermore, the control unit 53 may include a graphics processing unit (GPU) in addition to the CPU or instead of the CPU.

The control unit 53 includes an acquisition unit 531, a virtualization control unit 532, and a data processing control unit 533. Each of these functional blocks configuring the control unit 53 may be a software block or a hardware block. For example, the functional block may be a software module achieved by software (including a microprogram) or one circuit block on a semiconductor chip (die). Of course, each functional block may be one processor or one integrated circuit. The control unit 53 may be configured by a functional unit different from the above-described functional block, and a configuration method of the functional block is arbitrary.

The information processing unit 54 processes necessary calculation according to an instruction from the control unit 53. The information processing unit 54 includes, for example, a processor such as a CPU, an MPU, and a GPU. The information processing unit 54 may be a processor separate from the control unit 53, or may be a processor integrated with the control unit 53.

The network communication unit 55 is connected to the RU-mounted device 60 via the fronthaul. The fronthaul is realized by means of the optical fronthaul or the wireless fronthaul, and operates as the F1 interface or the Fx interface. Furthermore, the network communication unit 55 is connected to another information processing device 50 via a backhaul. The backhaul includes a means such as an optical backhaul or a wireless backhaul, and various application protocol messages or user plane data with the core network 30 and control information with the control device 10 are exchanged.

The acquisition unit 531 acquires the application protocol message or the user plane data from another information processing device 50 via the network communication unit 55. Furthermore, the acquisition unit 531 acquires a program for processing functions or services necessary for operating as the CU or the DU from the control device 10 via the network communication unit 55, and stores the program in the storage unit 52. The functions or services necessary for operating as the CU or the DU may be configured by a plurality of functional blocks, and the program for processing functions or services may be realized in a form of a plurality of software modules. Moreover, the acquisition unit 531 acquires the control information and the user plane data from another information processing device 50 or the RU-mounted device 60 via the network communication unit 55.

The virtualization control unit 532 implements, in the information processing unit 54, a program for processing functions or services necessary for operating as the CU or the DU according to the control information from the control device 10. This implementation of the program for processing functions or services may be performed dynamically. In a case where the program for processing functions or services necessary for operating as the CU or the DU is already stored in the storage unit 52, the virtualization control unit 532 selects a necessary software module from the storage unit 52 according to the control information from the control device 10, and implements the selected software module on the information processing unit 54. This implementation of the software module is realized by utilizing the above-described technology of virtualization or container. Here, a notification of the control information from the control device 10 is given via, for example, an application protocol message.

When the acquisition unit 531 acquires the user plane data, the information processing unit 54 executes processing of the functions or services necessary for operating as the CU or the DU on the acquired user plane data according to an instruction from the data processing control unit 533. Here, the functions or services necessary for operating as the CU are, for example, one or more functions or services processed in each sublayer of the SDAP and the PDCP. Furthermore, the functions or services necessary for operating as the DU are, for example, one or more functions or services processed in each sublayer of the RLC, the MAC, or the PHY. Furthermore, the functions or services necessary for operating as the RU are, for example, functions or services processed by the PHY.

The data processing control unit 533 selects a function or service to be processed in each sublayer according to the control information from the control device 10, and instructs the information processing unit 54 to execute processing corresponding to the function or service selected for each user plane data. The notification of the control information from the control device 10 may be given to the information processing device 50 as a form to be added to the user plane data, for example, as header information. Here, each function or service processed in each sublayer can be distinguished by the first identification information, and the control device 10 can give, to the data processing control unit 533, an instruction of the function or service that needs to be processed for each user plane data by notifying each information processing device 50 of the first identification information. Moreover, the information processing device 50 can be distinguished by the second identification information, and the control device 10 can give an instruction to execute processing of a different function or service for each information processing device 50 by notifying the information processing device 50 of the second identification information. Therefore, the control device 10 can distribute, to the information processing device 50, each processing of the CU or the DU among the CU, the DU, or the RU that needs to be processed as one base station device 20, and can instruct different setting of distribution processing for each user plane data. Here, the identification information is in the form of, for example, an identifier (ID) or a Human-Readable Name.

### F. Configuration of RU-mounted device

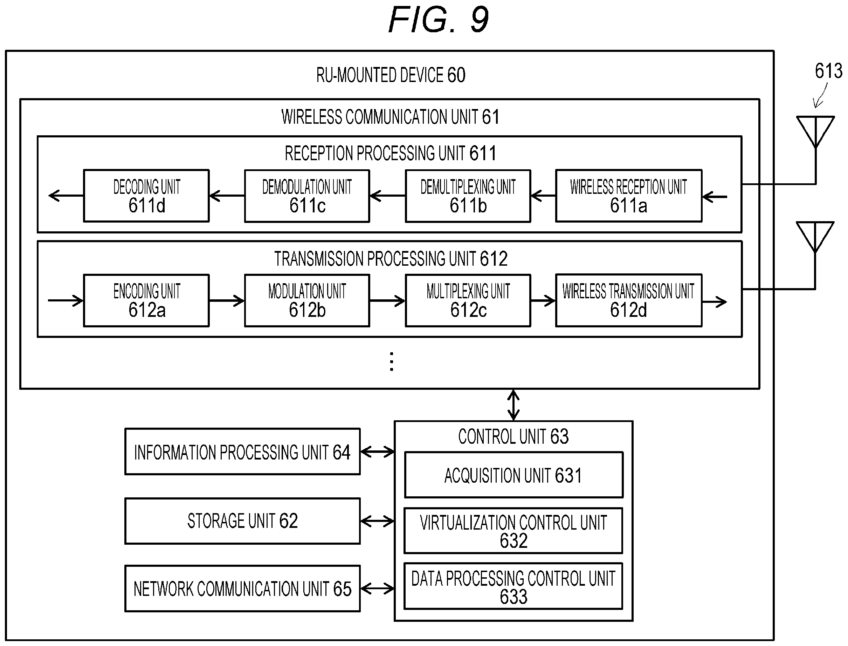

Fig. 9 illustrates a configuration of the RU-mounted device 60. The RU-mounted device 60 includes a communication unit 61, a storage unit 62, a control unit 63, an information processing unit 64, and a network communication unit 65. Note that Fig. 9 illustrates a functional configuration of the RU-mounted device 60, and an actual hardware configuration may be different from this. Furthermore, the functions of the RU-mounted device 60 may be distributed and implemented in a plurality of physically separated configurations.

The wireless communication unit 61 is a signal processing unit for wirelessly communicating with another wireless communication device (for example, the terminal device 40). The wireless communication unit 61 operates according to the control of the control unit 63. The wireless communication unit 61 supports one or more wireless access methods. For example, the wireless communication unit 61 supports both new radio (NR) and long term evolution (LTE). The wireless communication unit 61 may support wideband code division multiple access (W-CDMA) or cdma2000 in addition to NR or LTE. Furthermore, the wireless communication unit 61 may support an automatic retransmission technology such as HARQ.

The wireless communication unit 61 includes a reception processing unit 611, a transmission processing unit 612, and an antenna 613. The wireless communication unit 61 may include a plurality of communication sets including the reception processing unit 611, the transmission processing unit 612, and the antenna 613. Note that in a case where the wireless communication unit 61 supports a plurality of wireless access methods, an individual communication set may be provided for each wireless access method. For example, the reception processing unit 611 and the transmission processing unit 612 may be individually configured by LTE and NR. Furthermore, the antenna 613 may include a plurality of antenna elements (for example, a plurality of patch antennas). In this case, the wireless communication unit 61 may be configured to be beamformable. The wireless communication unit 61 may be configured to be able to perform polarization beamforming using vertically polarized waves (V-polarized waves) and horizontally polarized waves (H-polarized waves).

The reception processing unit 611 includes a wireless reception unit 611a, a demultiplexing unit 611b, a demodulation unit 611c, and a decoding unit 611d, and processes the uplink signal received via the antenna 613. For example, the wireless reception unit 611a performs, on the uplink signal, down-conversion, removal of an unnecessary frequency component, control of an amplification level, quadrature demodulation, conversion to a digital signal, removal of a guard interval (cyclic prefix), extraction of a frequency domain signal by fast Fourier transform, and the like. Then, the demultiplexing unit 611b demultiplexes an uplink channel such as a physical uplink shared channel (PUSCH) or a physical uplink control channel (PUCCH) and an uplink reference signal from the signal subjected to this processing. Furthermore, the demodulation unit 611c demodulates the received signal using a modulation method such as binary phase shift keying (BPSK) and quadrature phase shift keying (QPSK) for the modulation symbol of the uplink channel. The modulation method used for demodulation may be 16 quadrature amplitude modulation (QAM), 64 QAM, or 256 QAM. In this case, signal points on constellation do not necessarily have to be equidistant. The constellation may be non-uniform constellation (NUC). Then, the decoding unit 611d performs decoding processing on the demodulated encoded bits of the uplink channel. The decoded uplink data and uplink control information are output to the control unit 63.

The transmission processing unit 612 includes an encoding unit 612a, a modulation unit 612b, a multiplexing unit 612c, and a wireless transmission unit 612d, and performs transmission processing of downlink control information and downlink data. For example, the encoding unit 612a encodes the downlink control information and the downlink data input from the control unit 63 by using an encoding method such as block encoding, convolutional encoding, and turbo encoding. Here, the encoding may be performed by encoding with a polar code or encoding with a low density parity check code (LDPC code). Then, the modulation unit 612b modulates the coded bits by a predetermined modulation method such as BPSK, QPSK, 16 QAM, 64 QAM, and 256 QAM. In this case, signal points on constellation do not necessarily have to be equidistant. The constellation may be non-uniform constellation (NUC). Then, the multiplexing unit 612c multiplexes the modulation symbol of each channel and a downlink reference signal and arranges the result in a predetermined resource element. Then, the wireless transmission unit 612d performs various types of signal processing on the multiplexed signal. For example, the wireless transmission unit 612d performs processing such as conversion into a frequency domain by fast Fourier transform, addition of a guard interval (cyclic prefix), generation of a baseband digital signal, conversion into an analog signal, quadrature modulation, up-conversion, removal of an extra frequency component, and amplification of power. The signal generated by the wireless transmission unit 612d is transmitted from the antenna 613.

The antenna 613 is an antenna device that mutually converts a current and a radio wave. The antenna 613 may include one antenna element (for example, one patch antenna) or may include a plurality of antenna elements (for example, a plurality of patch antennas). In a case where the antenna 613 includes a plurality of antenna elements, the wireless communication unit 61 may be configured to be beamformable. For example, the wireless communication unit 61 may be configured to generate a directional beam by controlling the directivity of a wireless signal using a plurality of antenna elements. Note that the antenna 613 may be a dual-polarized antenna. In a case where the antenna 613 is a dual-polarized antenna, the wireless communication unit 61 may use vertically polarized waves (V-polarized waves) and horizontally polarized waves (H-polarized waves) at the time of transmitting a wireless signal. Then, the wireless communication unit 61 may control the directivity of the wireless signal transmitted using the vertically polarized waves and the horizontally polarized waves. Furthermore, the antenna 613 may be an antenna panel including one or more antenna elements, and the RU-mounted device 60 may be mounted with one or more antenna panels. For example, the RU may be mounted with two types of antenna panels of an antenna panel of horizontally polarized waves and an antenna panel of vertically polarized waves, or two types of antenna panels of an antenna panel of clockwise circularly polarized waves and an antenna panel of counterclockwise circularly polarized waves. Furthermore, the RU-mounted device 60 may form and control an independent beam for each antenna panel.

The storage unit 62 is a storage device, which is capable of reading and writing data, such as a DRAM, an SRAM, a flash memory, an HDD, and an SSD. The storage unit 62 functions as a storage means of the RU-mounted device 60.

The control unit 63 is a controller that integrally controls each unit in the RU-mounted device 60. For example, the control unit 63 includes a processor such as a CPU and an MPU. For example, the control unit 63 is realized by the processor executing various programs stored in the storage device inside the RU-mounted device 60 using a RAM or the like as a work area. Note that the control unit 63 may include an integrated circuit such as an ASIC and an FPGA. Any of the CPU, the MPU, the ASIC, and the FPGA can be regarded as the controller. Furthermore, the control unit 63 may include a GPU in addition to the CPU or instead of the CPU.

The control unit 63 includes an acquisition unit 631, a virtualization control unit 632, and a data processing control unit 633. Each of these functional blocks configuring the control unit 63 may be a software block realized by software (including a microprogram) or a hardware block realized by a circuit on a semiconductor chip (die). Of course, each functional block may be one processor or one integrated circuit. The control unit 63 may be configured by a functional unit different from the above-described functional block, and a configuration method of the functional block is arbitrary.

The information processing unit 64 processes calculation necessary for the reception processing unit 611 or the transmission processing unit 612 according to an instruction from the control unit 63. The information processing unit 64 includes, for example, a processor such as a CPU, an MPU, and a GPU. A processor separate from the control unit 63 may be used, or a processor integrated with the control unit 63 may be used.

The network communication unit 65 is connected to the information processing device 50-2 and another RU-mounted device 60 via a fronthaul. The fronthaul includes an optical fronthaul or a wireless fronthaul, and operates as the F1 interface or the Fx interface. Furthermore, the network communication unit 65 is connected to the information processing device 50-1 via a backhaul. The backhaul includes an optical backhaul or a wireless backhaul, and various application protocol messages or user plane data with the core network 30 and control information with the control device 10 are exchanged.

The acquisition unit 631 acquires the application protocol message or the user plane data from the information processing device 50-1 via the network communication unit 65. Furthermore, the acquisition unit 631 acquires a program for processing functions or services necessary for operating as the CU, the DU, or the RU from the control device 10 via the network communication unit 65, and stores the program in the storage unit 62. The functions or services necessary for operating as the CU, the DU, or the RU may be configured by a plurality of functional blocks, and the program for processing functions or services may be realized in a form of a plurality of software modules. Moreover, the acquisition unit 631 acquires the control information and the user plane data from another RU-mounted device 60 via the network communication unit 65.

The virtualization control unit 632 implements, in the information processing unit 64, a program for processing functions or services necessary for operating as the CU, the DU, or the RU according to the control information from the control device 10. This implementation of the program for processing functions or services may be performed dynamically. In a case where the program for processing functions or services necessary for operating as the CU, the DU, or the RU is already stored in the storage unit 62, the virtualization control unit 632 selects a necessary software module from the storage unit 62 according to the control information from the control device 10, and implements the selected software module on the information processing unit 64. This implementation of the software module is realized by utilizing the above-described technology of virtualization or container. Here, a notification of the control information from the control device 10 is given via, for example, an application protocol message.

When the acquisition unit 631 acquires the user plane data, the information processing unit 64 executes processing of the functions or services necessary for operating as the CU, the DU, or the RU on the acquired user plane data according to an instruction from the data processing control unit 633. Here, the functions or services necessary for operating as the CU are, for example, one or more functions or services processed in each sublayer of the SDAP and the PDCP. Furthermore, the functions or services necessary for operating as the DU are, for example, one or more functions or services processed in each sublayer of the RLC, the MAC, or the PHY. Moreover, the functions or services necessary for operating as the RU are, for example, one or more functions or services processed at a sublayer of the PHY.

The data processing control unit 633 selects a function or service to be processed in each sublayer according to the control information from the control device 10, and instructs the information processing unit 64 to execute processing corresponding to the function or service selected for each user plane data. The notification of the control information from the control device 10 may be given to the RU-mounted device 60 as a form to be added to the user plane data, for example, as header information.

Here, each function or service processed in each sublayer can be distinguished by the first identification information. Therefore, the control device 10 can give, to the data processing control unit 633, an instruction of the function or service that needs to be processed for each user plane data by notifying each RU-mounted device 60 of the first identification information. Moreover, each RU-mounted device 60 may be distinguished by the second identification information. Therefore, the control device 10 can give an instruction to execute processing of different functions or services for each RU-mounted device 60 by notifying the RU-mounted device 60 of the second identification information. Therefore, the control device 10 can distribute, to the plurality of RU-mounted devices 60 or the information processing device 50-2, each processing of the CU, the DU, or the RU that needs to be processed as one base station device 20, and can instruct different setting of distribution processing for each user plane data. Here, one device (RU-mounted device 60-1) or a plurality of devices (the RU-mounted device 60-2 and the RU-mounted device 60-3, or the information processing device 50-2 and the RU-mounted device 60-4) can be regarded as the base station device 20.

### G. Configuration of terminal device

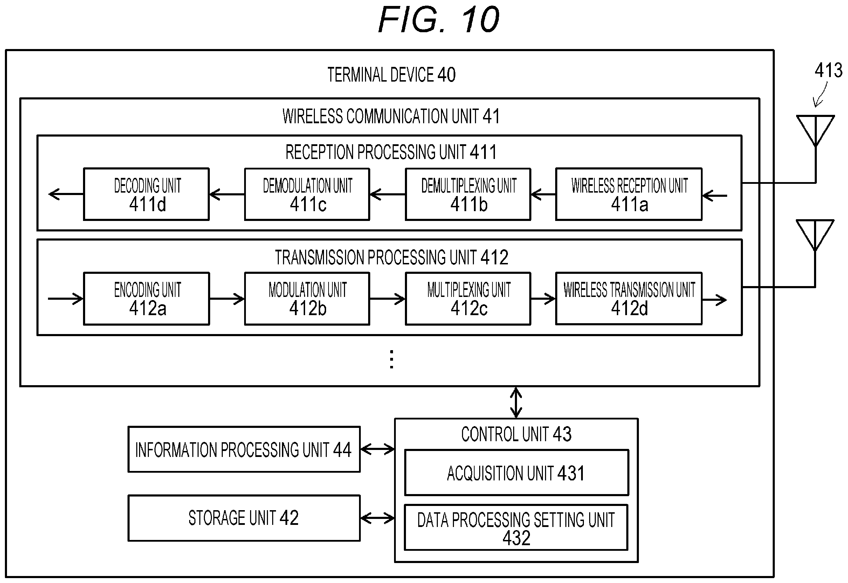

Fig. 10 illustrates a configuration of the terminal device 40. The terminal device 40 includes a communication unit 41, a storage unit 42, a control unit 43, and an information processing unit 44. Note that Fig. 10 illustrates a functional configuration of the terminal device 40, and an actual hardware configuration of the terminal device 40 may be different from that in Fig. 10, for example, in including functional modules other than those illustrated. Furthermore, the functions of the terminal device 40 may be distributed and implemented in a plurality of physically separated configurations.

The wireless communication unit 41 is a signal processing unit for wirelessly communicating with other wireless communication devices (for example, the base station 20, a relay station, a wireless communication node or a donor node, and another terminal device 40). The wireless communication unit 41 operates according to the control of the control unit 43. The wireless communication unit 41 includes a reception processing unit 411, a transmission processing unit 412, and an antenna 413. The configurations of the wireless communication unit 41, the reception processing unit 411, the transmission processing unit 412, and the antenna 413 may be similar to those of the wireless communication unit 61, the reception processing unit 611, the transmission processing unit 612, and the antenna 613 of the RU-mounted device 60. Furthermore, the wireless communication unit 41 may be configured to be beamformable similarly to the wireless communication unit 61.

The storage unit 42 is a storage device, which is capable of reading and writing data, such as a DRAM, an SRAM, a flash memory, and a hard disk. The storage unit 42 functions as a storage means of the terminal device 40. The storage unit 42 stores a program for processing necessary functions or services corresponding to processing executed by the CU, the DU, or the RU in advance.

The control unit 43 is a controller that controls each unit of the terminal device 40. For example, the control unit 43 includes a processor such as a CPU and an MPU. For example, the control unit 43 is realized by the processor executing various programs stored in the storage device inside the terminal device 40 using a RAM or the like as a work area. Note that the control unit 43 may include an integrated circuit such as an ASIC and an FPGA. Any of the CPU, the MPU, the ASIC, and the FPGA can be regarded as the controller. Furthermore, the control unit 43 may include a GPU in addition to the CPU or instead of the CPU.

The control unit 43 includes an acquisition unit 431 and a data processing setting unit 432. Each block (the acquisition unit 431 and the data processing setting unit 432) configuring the control unit 43 is a functional block indicating a function of the control unit 43. Each of these functional blocks may be a software block realized by software (including a microprogram) or a hardware block realized by a circuit on a semiconductor chip (die). Of course, each functional block may be one processor or one integrated circuit. The control unit 43 may be configured by a functional unit different from the above-described functional block, and a configuration method of the functional block is arbitrary.

The information processing unit 44 processes calculation necessary for an application executed by the reception processing unit 411, the transmission processing unit 412, or the terminal device 40 according to an instruction from the control unit 43. The information processing unit 44 includes, for example, a processor such as a CPU, an MPU, and a GPU. A processor separate from the control unit 43 may be used, or a processor integrated with the control unit 43 may be used.

The acquisition unit 431 acquires the control information and the user plane data from the base station device 20 or the RU-mounted device 60 via the wireless communication unit 41. Furthermore, the acquisition unit 431 acquires a program for processing functions or services corresponding to processing executed by the CU, the DU, or the RU as necessary from the control device 10 via the wireless communication unit 41, and stores the program in the storage unit 42. In a case where the storage unit 42 has already stored the program, the program is updated with a newly acquired program. The functions or services corresponding to processing executed in the CU, the DU, or the RU may be configured by a plurality of functional blocks, and the program for processing functions or services may be realized in a form of a plurality of software modules.

The data processing setting unit 432 sets, in the information processing unit 44, a program for processing necessary functions or services corresponding to processing executed by the CU, the DU, or the RU according to the control information from the control device 10. This setting of the program for processes functions or services may be performed dynamically. Here, the control device 10 can instruct the data processing setting unit 432 to set a program for processing a different function or service for each user plane data. In a case where the program for processing functions or services corresponding to processing executed by the CU, the DU, or the RU is already implemented in the information processing unit 44, the data processing setting unit 432 reflects the setting such that only necessary processing is executed according to the control information from the control device 10. In a case where the program is not implemented in the information processing unit 44, a necessary software module is selected from the storage unit 42 according to the control information from the control device 10 and implemented in the information processing unit 44. Here, the control information from the control device 10 is notified via, for example, a non-access stratum (NAS) message.

When the acquisition unit 431 acquires the user plane data, the information processing unit 44 executes processing of functions or services corresponding to processing executed by the CU, the DU, or the RU on the acquired user plane data. Here, the functions or services corresponding to processing executed by the CU, the DU, or the RU are, for example, one or more functions or services processed in each sublayer of the SDAP, the PDCP, the RLC, the MAC, and the PHY.

### H. Method of identifying functions or services of each sublayer

In 5G, it is required to cover a wide frequency band such as a frequency band called sub 6 GHz or a millimeter wave band of 27 GHz or more in addition to 800 MHz or 2 GHz band conventionally used in a cellular system. Here, it is considered that the necessity of functions such as beamforming, resistance to blocking by a moving object (for example, application of diversity, or the like), and coping with high-speed mobility depends on the operation frequency. Furthermore, in 5G, it is required to support slices having different requests for wireless communication such as eMBB, URLLC, and mMTC. In this regard, control of dynamically changing the setting of the distribution processing for each user plane data described above according to the operation frequency to be used and the slice to be applied is considered, and a method of identifying each processing is required in order to notify each device of the processing of distributing for each user plane data.

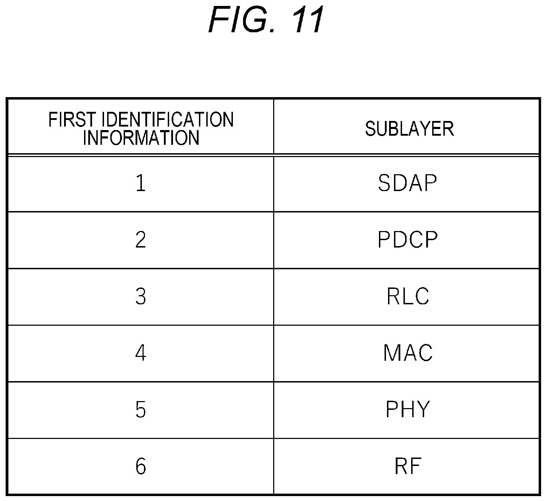

Fig. 11 illustrates an example of identifying processing in units of sublayers. In the example illustrated in Fig. 11, different identification information is assigned in advance such that "1" is assigned to the SDAP, "2" is assigned to the PDCP sublayer, "3" is assigned to the RLC sublayer, "4" is assigned to the MAC sublayer, "5" is assigned to the PHY sublayer, and "6" is assigned to the RF sublayer.

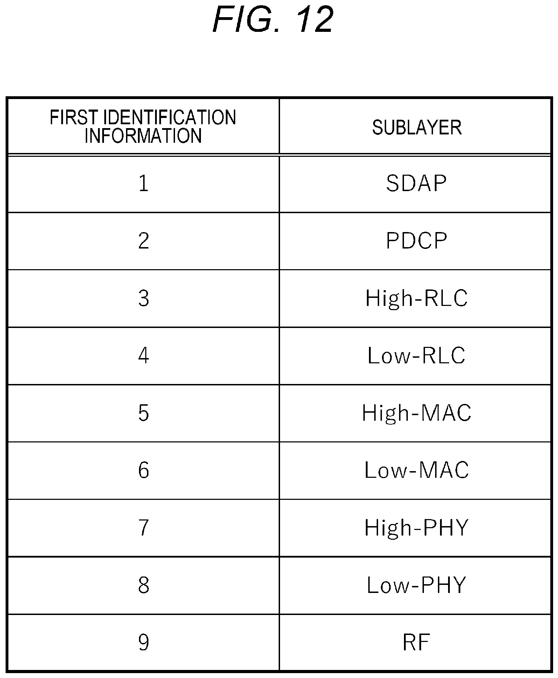

Fig. 12 illustrates another example of identifying processing in units of sublayers. In the example shown in Fig. 12, different identification information is assigned in advance such that "1" is assigned to the SDAP sublayer, "2" is assigned to the PDCP sublayer, "3" is assigned to the High-RLC sublayer, "4" is assigned to the Low-RLC sublayer, "5" is assigned to the High-MAC sublayer, "6" is assigned to the Low-MAC sublayer, "7" is assigned to the High-PHY sublayer, "8" is assigned to the Low-PHY sublayer, and "9" is assigned to the RF. In the example illustrated in Fig. 12, the sublayers of the PHY, the MAC, and the RLC are classified into two of Low and High, but may be classified into three of Low, Mid, and High or three or more. Furthermore, the PDCP and the SDAP may also be classified into two or more.

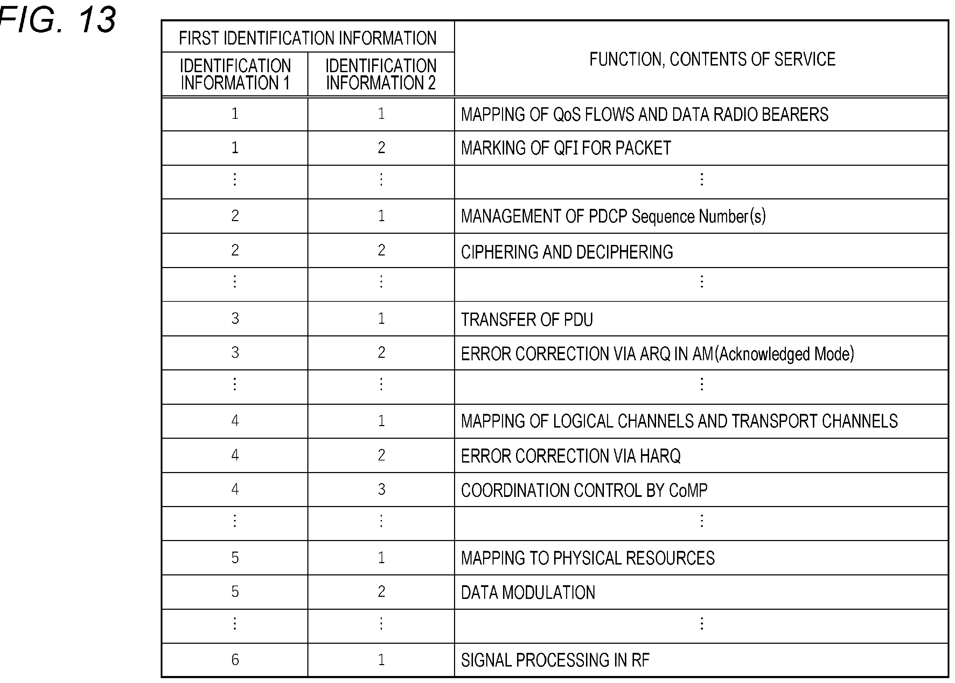

Fig. 13 illustrates an example of identifying processing in units of functions or services. In the example illustrated in Fig. 13, the first identification information includes identification information 1 for identifying each sublayer and identification information 2 for identifying a function or service, and each function or service can be identified by the first identification information. For example, to "mapping of QoS flows and data radio bearers" which is a function or service provided by the SDAP sublayer, "1" is assigned as the identification information 1, and "1" is assigned as the identification information 2, and to "marking of QFI for packet", "1" is assigned as the identification information 1, and "2" is assigned as the identification information 2. For example, to "management of PDCP Sequence Number(s)" which is a function or service provided by the PDCP sublayer, "2" is assigned as the identification information 1, and "1" is assigned as the identification information 2, and to "ciphering and deciphering", "2" is assigned as the identification information 1, and "2" is assigned as the identification information 2. For example, in "transfer of PDU" which is a function or service provided by the RLC sublayer, "3" is assigned as the identification information 1, "1" is assigned as the identification information 2, and in "error correction via ARQ in acknowledged mode (AM)", "3" is assigned as the identification information 1, and "2" is assigned as the identification information 2. For example, to "mapping of logical channels and transport channels" which is a function or service provided by the MAC sublayer, "4" is assigned as the identification information 1, and "1" is assigned as the identification information 2, to "error correction via HARQ", "4" is assigned as the identification information 1, and "2" is assigned as the identification information 2, and to "coordination control by coordinated multi-point (CoMP)", "4" is assigned as the identification information 1, and "3" is assigned as the identification information 2. For example, to "mapping to physical resources" which is a function or service provided by the PHY sublayer, "5" is assigned as the identification information 1, and "1" is assigned as the identification information 2, and to "data modulation", "5" is assigned as the identification information 1, and "2" is assigned as the identification information 2. For example, to "signal processing in RF" which is a function or service to be provided by RF, "6" is assigned as the identification information 1 and "1" is assigned as the identification information 2. In the example illustrated in Fig. 13, each sublayer is identified with the granularity illustrated in Fig. 11, but each sublayer may be identified with finer granularity as illustrated in Fig. 12. Furthermore, each sublayer may be defined and identified for each distributed device.

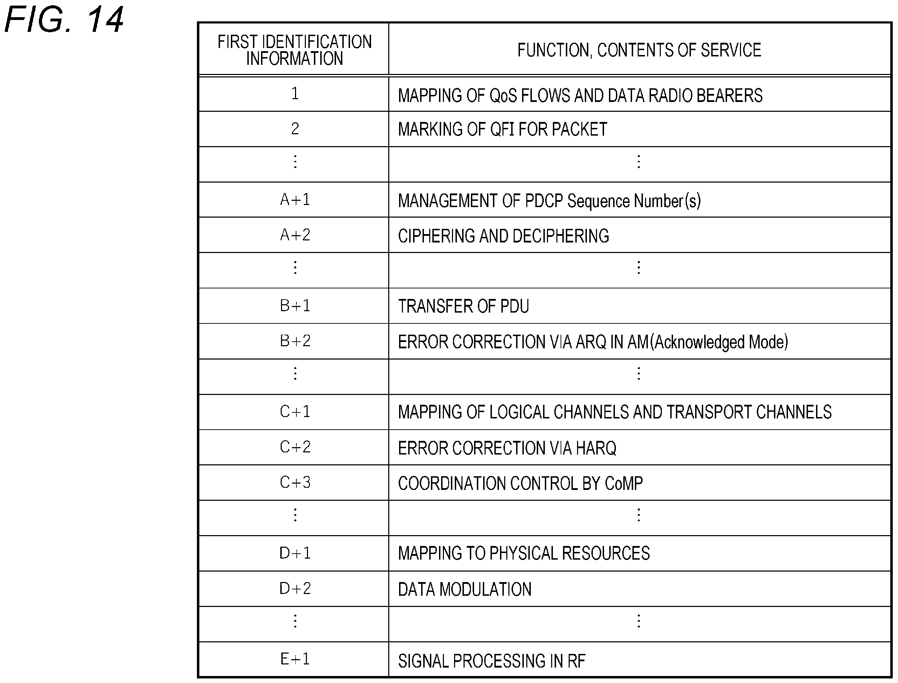

Fig. 14 illustrates another example of identifying processing in units of functions or services. In the example illustrated in Fig. 14, each sublayer is not identified with the first identification information, that is, the first identification information for identifying a function or service provided by each sublayer is assigned to the sublayer in a flat manner. For example, to "mapping of QoS flows and data radio bearers", "1" is assigned as the first identification information, and to "marking of QFI for packet", "2" is assigned as the first identification information. To "management of PDCP Sequence Number(s)", "A+1" is assigned as the first identification information, and to "ciphering and deciphering", "A+2" is assigned as the first identification information. To "transfer of PDU", "B+1" is assigned as the first identification information, and to "error correction via ARQ in acknowledged mode (AM)", "B+2" is assigned as the first identification information. To "mapping of logical channels and transport channels", "C+1" is assigned as the first identification information, to "error correction via HARQ", "C+2" is assigned as the first identification information, and to "coordination control by CoMP", "C+3" is assigned as the first identification information. To "mapping to physical resources", "D+1" is assigned as the first identification information, and to "data modulation", "D+2" is assigned as the first identification information. To "signal processing in RF", "E+1" is assigned as the first identification information. Note that at least one of the sublayers, functions, or services illustrated in Figs. 11 to 14 may be associated with one or more network slices. For example, each of the sublayers, functions, or services illustrated in Figs. 11 to 14 may be a network slice instance configuring a network slice. Additionally or alternatively, the first identification information illustrated in Figs. 11 to 14 may be associated with an identifier (for example, single network slice selection assistance identifier (S-NSSAI)) of the network slice. Additionally or alternatively, each or a plurality of combinations of the sublayers, functions, or services illustrated in Figs. 11 to 14 may configure a slice (for example, a RAN slice) in the RAN. In this case, the first identification information may be a name of a RAN slice identifier, or a plurality of pieces of first identification information may be associated with one RAN slice identifier. Additionally or alternatively, one or more RAN Slice Identifiers may be associated with one or more network slice identifiers (for example, single network slice selection assistance identifier (S-NSSAI)). In these cases, the "first identification information" described above or below may be at least one of the identifier (for example, single network slice selection assistance identifier (S-NSSAI)) of the network slice associated with the first identification information or the RAN slice identifier, or may include at least one thereof together with the first identification information. Moreover, the processing and operation using the "first identification information" described above or below may be processing and operation using at least one of the identifier (for example, single network slice selection assistance identifier (S-NSSAI)) of the network slice associated with the first identification information or the RAN Slice Identifier.

In the wireless communication system 200, in order to identify processing, as illustrated in Figs. 11 to 14, the first identification information is assigned in units of sublayers, or functions or services, and for example, the assignment of the first identification information is managed in the control device 10. Here, the control device 10 may dynamically change the assignment of the first identification information, and when changing the assignment of the first identification information, the control device 10 instructs the information processing device 50, the RU-mounted device 60, or the terminal device 40 to change the assignment of the first identification information.

### I. Method of identifying device to be subjected to distribution processing

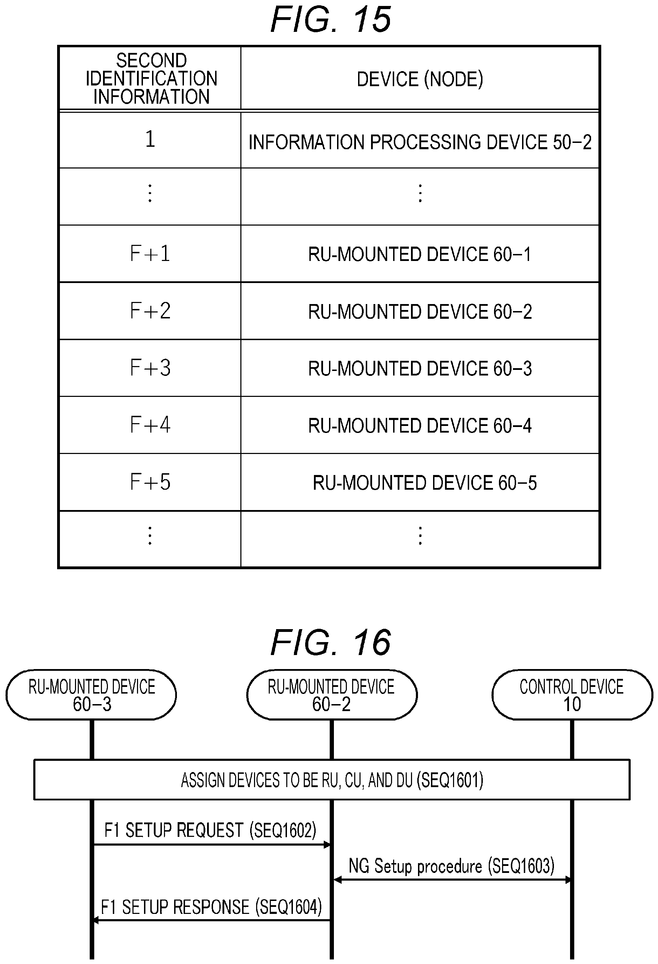

In a case where each processing related to the function or service provided by the sublayer is distributed to a plurality of devices, each device needs to be identified. For example, a MAC address allocated to the device as a unique address is used as the second identification information to identify each device to be subjected to the distribution processing. Furthermore, as illustrated in Fig. 15, the second identification information unique to the wireless communication system 200 may be allocated to each device. For example, in the wireless communication system 200, "1" is assigned as the second identification information to the information processing device 50-2, "F+1" is assigned as the second identification information to the RU-mounted device 60-1, "F+2" is assigned as the second identification information to the RU-mounted device 60-2, and the assignment of the second identification information is managed in the control device 10. Here, the wireless communication system 200 may be a unit of a PLMN or a non-public network (NPN). Furthermore, the wireless communication system 200 may be a unit of a Terrestrial Network (TN) or a non-Terrestrial Network (NTN). Note that the control device 10 may dynamically change the assignment of the second identification information, and when changing the assignment of the second identification information, the control device 10 instructs the information processing device 50 or the RU-mounted device 60 to change the assignment of the second identification information.

Note that the device identification method illustrated in Fig. 15 is an example, and a plurality of devices may be classified for each zone or area, the identification information 1 may be assigned to each zone or area, the identification information 2 for identifying each device in a zone or area may be assigned, and the second identification information may be configured from the identification information 1 and the identification information 2. Additionally or alternatively, the second identification information for identifying each device may be an identifier of a device defined in 3GPP or an identifier of a cell served by the device. For example, the second identification information for identifying each device may be a gNB-DU ID or a Global gNB ID defined in 3GPP. Here, the gNB-DU ID is an ID uniquely identifying the gNB-DU in one gNB-CU. Furthermore, for example, the identifier of the cell served by each device may be a new radio cell global identifier (NR CGI).

### J. Procedure of setting functions or services necessary for operating as CU, DU, or RU

Setting of functions or services necessary for operating as the CU, the DU, or the RU is performed via an NG application protocol (NGAP) that provides a signaling service between the NG-RAN 20 and the AMF 301 in the network architecture of 5GS illustrated in Fig. 6, for example.

Fig. 16 illustrates an example of a sequence for setting the F1 interface. The control device 10 assigns devices to be the RU, the DU, and the CU (SEQ1601). In the example illustrated in Fig. 16, the control device 10 assigns the RU-mounted device 60-2 as a device that operates as the CU, and assigns the RU-mounted device 60-3 as a device that operates as the DU including the RU.

Here, when assigning the RU-mounted device 60-2 as the device that operates as the CU, the control device 10 notifies the RU-mounted device 60-2 of an instruction to set a container including processing of functions or services necessary for the operation of the CU. Furthermore, when assigning the RU-mounted device 60-3 as the device that operates as the DU including the RU, the control device 10 notifies the RU-mounted device 60-3 of an instruction to set a container including processing of functions or services necessary for the operation of the DU including the RU. The notification may include an address (for example, an IP address, a port number, or the like) indicating a device that acquires an application body configuring the container, a necessary library, a setting file, and the like. The RU-mounted device 60-2 and the RU-mounted device 60-3 acquire the application body, the necessary library, the setting file, and the like from the device indicated by this address.

The RU-mounted device 60-3 transmits, for example, an F1 SETUP REQUEST message to the RU-mounted device 60-2 (SEQ1602). The RU-mounted device 60-2 that has received the F1 SETUP REQUEST message executes an NG setup procedure with the control device 10 (SEQ1603). When the NG setup with the control device 10 is completed, the RU-mounted device 60-2 responds to the RU-mounted device 60-3 with the F1 SETUP RESPONSE message (SEQ1604), and completes the setting of the F1 interface between the RU-mounted device 60-3 and the RU-mounted device 60-2.

Note that Fig. 16 illustrates a sequence example for setting the F1 interface, but in a case where the RU and the DU are further divided into a plurality of devices, the F1 interface and the Fx interface are set according to a similar procedure between the device operating as the RU, the device operating as the DU, and the device operating as the CU.

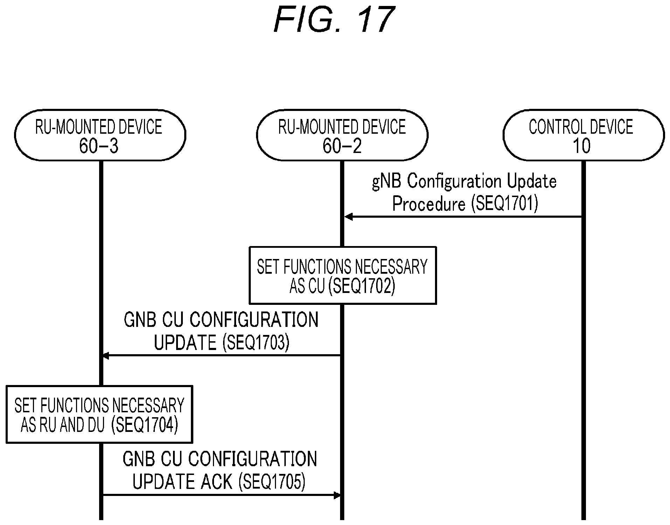

Fig. 17 illustrates an example of a sequence for setting the functions of the RU, the DU, and the CU. The control device 10 executes a gNB configuration update procedure (SEQ1701) and instructs the RU-mounted device 60-2 to set the gNB. The setting of the gNB includes, for example, setting functions necessary for operating as the CU in the RU-mounted device 60-2, and setting functions necessary for operating as the DU including the RU in the RU-mounted device 60-3.

According to the setting of the gNB, the RU-mounted device 60-2 sets the functions necessary for operating as the CU (SEQ1702). The setting of the functions necessary for operating as the CU is performed by the control device 10 notifying the RU-mounted device 60-2 of a list including identification information corresponding to each function or service provided by each sublayer or sublayer illustrated in Figs. 12 to 14. The RU-mounted device 60-2 performs setting such that, for example, the function or service corresponding to the identification information included in this list can be processed as a container. Here, the functions necessary for operating as the CU are, for example, the functions provided by the SDAP sublayer and the PDCP sublayer.

Subsequently, the RU-mounted device 60-2 notifies, via the GNB CU CONFIGURATION UPDATE message, the RU-mounted device 60-3 of an instruction to set the functions necessary for operating as the DU including the RU (SEQ1703). The setting of the functions necessary for operating as the DU including the RU is performed by notifying the RU-mounted device 60-3 of a list including identification information corresponding to each function or service provided by each sublayer or sublayer illustrated in Figs. 12 to 14. Here, the functions necessary for operating as the DU including the RU are, for example, the functions provided by the RLC sublayer, the MAC sublayer, the PHY sublayer, and the RF.

The RU-mounted device 60-3 that has received the instruction to set the necessary functions sets the functions necessary for operating as the DU including the RU (SEQ1704), and responds to the RU-mounted device 60-2 with a GNB CU CONFIGURATION UPDATE ACK message (SEQ1705). Furthermore, in a case where an instruction to set the function necessary for operating as the RU in another device is included, the RU-mounted device 60-3 sets the function necessary for operating as the DU, and further notifies another device of the instruction to set the functions necessary for operating as the RU.

According to the above procedure, the control device 10 can dynamically set the functions necessary for the RU-mounted device 60-2 and the RU-mounted device 60-3 by using the gNB configuration update procedure. In the example illustrated in Fig. 17, the functions necessary for gNB configuration are distributed and configured in two devices of the RU-mounted device 60-2 and the RU-mounted device 60-3, but the functions may be distributed and configured in three or more devices.

Here, the control device 10 may perform setting such that the RU-mounted device 60-2 is caused not only to operate as the CU of the device (RU-mounted device 60-3) that operates as the DU, but also to be able to operate alone as the gNB at the frequency f1 as in the base station device 20-1 illustrated in Fig. 4, for example. That is, the RU-mounted device 60-2 is set with the functions necessary for operating alone as the gNB, and is constructed with an interface (for example, the F1 interface) with another device (RU-mounted device 60-3), so as to be operated as the CU for another device.

Furthermore, the control device 10 may permit the RU-mounted device 60-2, in which the functions necessary for operating as the CU are set, to control the setting of the functions necessary for operating as the DU including the RU. The RU-mounted device 60-2 may decide, on the basis of this permission, another device, to which the functions necessary for operating as the DU including the RU are to be set, according to the state (for example, mobility) of the terminal device 40. Moreover, the RU-mounted device 60-2 can decide another device, which causes the RU or the DU to execute processing of necessary functions or services, according to the type of the received user plane data.

### K. distribution control method according to type of user plane data

In the mobile wireless communication system of 5G or later (B5G), it is considered that the service/application is classified with finer granularity than eMBB, URLLC, and mMTC supported by 5G, and data is transmitted and received by a method optimized for each service/application according to the situation (for example, mobility) and the environment (for example, indoor or outdoor) of the UE. Moreover, with the development of optical lines, the spread of distributed computing and virtualization technologies, and the improvement of the computing processing capacity of a device, the network is required to have resiliency for the operation frequency of the base station, the situation and environment of the UE, the service/application, and the like. In order to provide elasticity to the functions and services processed by the base station, it is desirable that the processing related to functions and services currently provided by each sublayer be dynamically selective and identifiable.

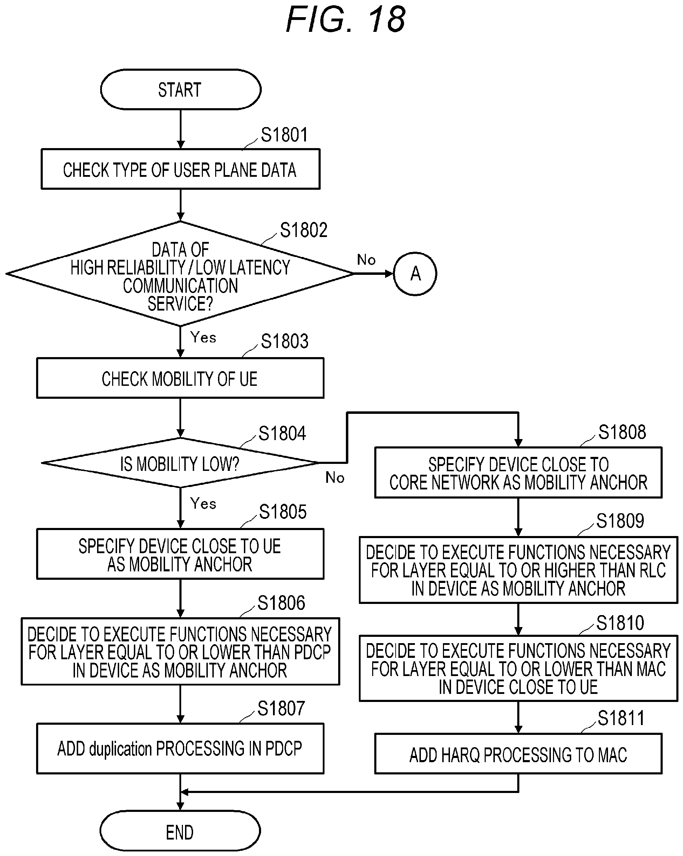

Figs. 18 to 20 illustrate an example of control of distribution processing according to the type of communication service in the control device 10 in the form of a flowchart.

The control device 10 checks the type of the user plane data (step S1801), and determines whether or not the data is data of a high reliability/low latency communication service (step S1802). Here, in a case where the type of the user plane data is data of the high reliability/low latency communication service (Yes in step S1802), the control device 10 further checks the mobility of the UE (terminal device 40) (step S1803), and determines whether or not the mobility of the UE is low (step S1804).

Then, in a case where the mobility of the UE is low (Yes in step S1804), when the control device 10 specifies a device (for example, the RU-mounted device 60-4) close to the UE as a mobility anchor (step S1805), the control device decides to process functions necessary for a sublayer (that is, PDCP, RLC, MAC, PHY, and RF) equal to or lower than the PDCP sublayer in the device serving as the mobility anchor (step S1806), adds duplication processing to the processing in the PDCP sublayer in order to improve reliability (step S1807), and ends this processing. As described above, the control device 10 causes the device close to the UE to execute the duplication processing, thereby reducing traffic in the backhaul and the fronthaul.

Here, the control device 10 may add forward error correction function (FEC) processing instead of duplication processing according to a delay requested for the communication service. For example, in a case where the requested delay is equal to or less than a certain threshold value, the FEC processing is added in step S1807. The delay requested for the communication service is determined by, for example, a packet delay budget (PDB). Note that whether or not to add the FEC processing in step S1807 is determined on the basis of information indicating whether or not the UE has a function of processing the FEC. The information indicating whether or not the UE has a function of processing the FEC is acquired, for example, via capability information of the UE.

On the other hand, in a case where the mobility of the UE is high (No in step S1804), the control device 10 specifies a device (for example, the information processing device 50-2) close to the core network 30 as a mobility anchor (step S1808). As described above, the reason why the device close to the core network 30 is specified as the mobility anchor is that when the device close to the UE is set as the mobility anchor, it is necessary to frequently switch the mobility anchor according to the movement of the UE.

Subsequently, the control device 10 decides to execute functions necessary for a sublayer (that is, SDAP, PDCP, and RLC) equal to or higher than the RLC sublayer in the device serving as the mobility anchor (the device close to the core network 30) (step S1809), and decides to execute functions necessary for a sublayer (that is, MAC, PHY, and RF) equal to or lower than the MAC sublayer in the device close to the UE (for example, the RU-mounted device 60-4) (step S1810). Then, in order to improve reliability, the control device 10 adds HARQ processing to the processing in the MAC sublayer (step S1811) and ends this processing.

Here, in a case where the duplication processing is added to the processing in the PDCP sublayer in order to improve reliability, the traffic of the fronthaul between the information processing device 50-2 and the RU-mounted device 60-4 increases. Therefore, the HARQ processing is added not to the duplication processing in the PDCP sublayer but to the processing of the MAC sublayer to be processed by the RU-mounted device 60-4 that is a device close to the UE in consideration of the delay. Furthermore, in a case where the UE supports multi-antenna, the control device 10 may add diversity processing using multi-antenna to the processing in the MAC sublayer in order to improve reliability. Moreover, the PDCP sublayer may also use duplication within an allowable range of traffic of the fronthaul. For example, in a case where another device close to the UE is available in addition to the RU-mounted device 60-4, a split bearer may be set for each device to set duplication without increasing the traffic of the fronthaul. That is, it is possible to apply a method corresponding to a method of distributing functions among various methods of improving reliability.

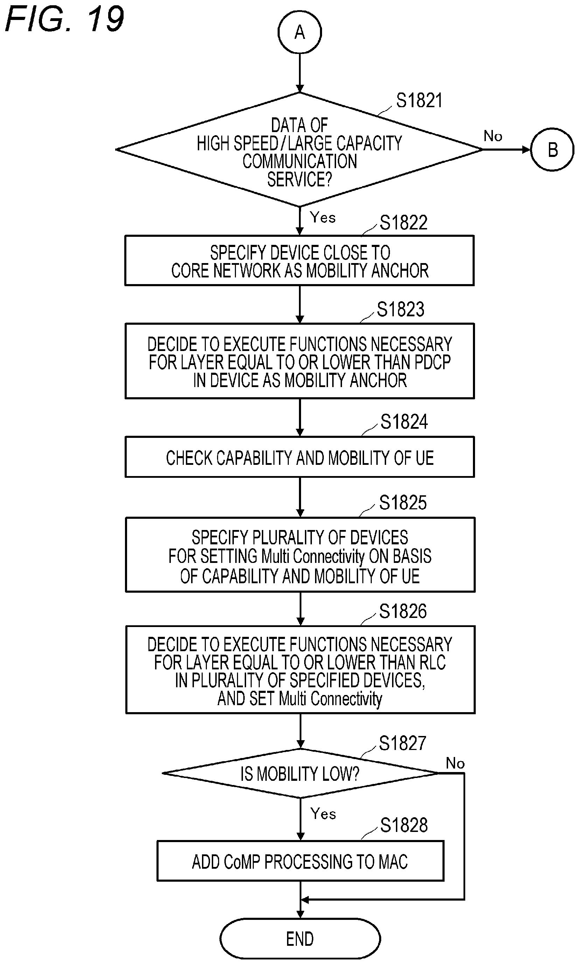

A processing procedure in a case where it is determined that the data is not the data of the high reliability/low latency communication service (No in step S1802) is illustrated in Fig. 19. When it is determined that the data is not the data of the high reliability/low latency communication service, subsequently, the control device 10 determines whether or not the data is the data of the high speed/large capacity communication service (step S1821).

In a case where the type of the user plane data is the data of the high speed/large capacity communication service (Yes in step S1821), the control device 10 specifies a device (for example, the information processing device 50-2) close to the core network 30 as the mobility anchor, so as to be able to set multi-connectivity for improving a data rate (step S1822). Subsequently, the control device 10 decides the execution of functions necessary for the PDCP sublayer in the device (the device close to the core network 30) serving as the mobility anchor (step S1823). Subsequently, the control device 10 checks the capability and mobility of the UE (step S1824), and specifies a plurality of devices for setting multi connectivity on the basis of the capability and mobility of the UE (step S1825).

Here, the control device 10 checks the configuration of the wireless communication unit 41 of the terminal device 40 via the capability information of the UE. If the terminal device 40 can simultaneously operate in a plurality of frequency bands, it is decided to set the multi connectivity, and the plurality of devices for setting the multi connectivity is specified on the basis of mobility. For example, in a case where the wireless communication unit 41 supports operation in the 800 MHz band, 1.7 GHz, 1.8 GHz, or 2 GHz band such as the frequency f1 described above and the millimeter wave band such as the frequency f3, and the mobility is low, the plurality of devices for setting the multi connectivity is the RU-mounted device 60 that can operate at the frequency f1 and the RU-mounted device 60 that can operate at the frequency f3. Furthermore, in a case where the wireless communication unit 41 supports the operation in the frequency f1 and the sub 6 GHz band such as the frequency f2 described above, and the mobility is high, the plurality of devices for setting the multi connectivity are the RU-mounted device 60 that can operate at the frequency f1 and the RU-mounted device 60 that can operate at the frequency f2.

Subsequently, the control device 10 decides execution of functions necessary for a sublayer (that is, RLC, MAC, PHY, and RF) equal to or lower than the RLC in the plurality of specified devices, and sets the multi connectivity (step S1826). Then, the control device 10 determines the mobility of the UE (step S1827). Then, in a case where the mobility of the UE is low (Yes in step S1827), if a plurality of RUs is mounted, CoMP processing is added to the processing of the MAC sublayer in the RU-mounted device 60 capable of operating at the frequency f3 (step S1828), and this processing is ended. Furthermore, in a case where the mobility of the UE is not low (No in step S1827), this processing is ended as it is. Note that the control device 10 may determine whether the UE is indoors in addition to or instead of the mobility determination (step S1827). Generally, since the mobility of the UE is low indoors, for example, if the UE is mounted with a plurality of RUs, the control device 10 adds the CoMP processing to the processing of the MAC sublayer in the RU-mounted device 60 capable of operating at the frequency f3.

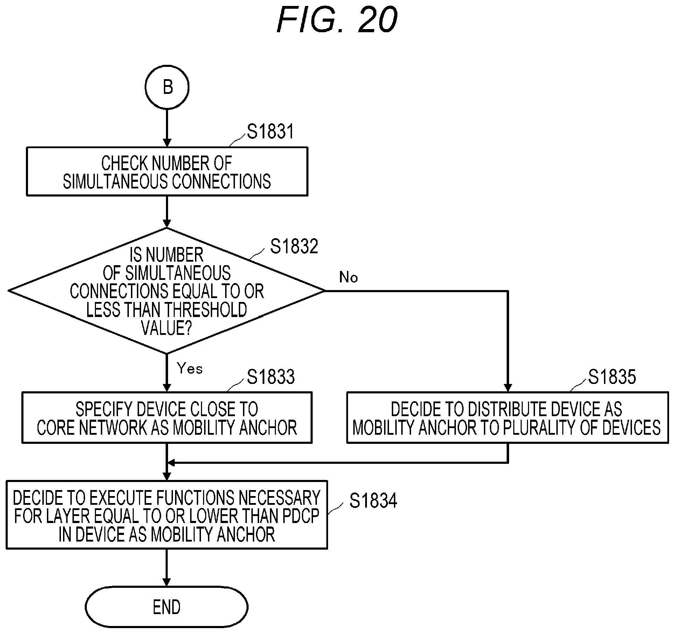

Furthermore, a processing procedure in a case where it is determined that the data is not the data of the high speed/large capacity communication service (No in step S1821) is illustrated in Fig. 20. In a case where it is determined that the user plane data is not data of the high speed/large capacity communication service, the control device 10 determines that the user plane data is data of a large number of simultaneous connection communication services, checks the number of simultaneous connections (step S1831), and determines whether or not the number of simultaneous connections is equal to or less than a threshold value (step S1832).

Here, in a case where the number of simultaneous connections is equal to or smaller than the threshold value (Yes in step S1832), the control device 10 specifies a device (for example, the information processing device 50-2) close to the core network 30 as the mobility anchor (step S1833). Then, the control device 10 decides execution of functions necessary for a sublayer (that is, PDCP, RLC, MAC, PHY, and RF) equal to or lower than the PDCP sublayer in the device (the device close to the core network 30) serving as the mobility anchor (step S1834), and ends this processing.

On the other hand, in a case where it is determined that the number of simultaneous connections exceeds the threshold value (No in step S1832), the control device 10 decides to distribute the device serving as the mobility anchor to a plurality of devices (step S1835). For example, the control device 10 decides to distribute the devices serving as the mobility anchors to the RU-mounted device 60-4 and the RU-mounted device 60-5. Then, the control device 10 decides execution of functions necessary for a sublayer (that is, PDCP, RLC, MAC, PHY, and RF) equal to or lower than the PDCP sublayer in a plurality of devices (the RU-mounted device 60-4 and the RU-mounted device 60-5) serving as the mobility anchor (step S1834), and ends this processing.

As described above with reference to Figs. 18 to 20, the control device 10 can perform dynamic distribution control according to the criteria prioritized for each type of user plane data from among various criteria such as delay, reliability, data rate, and the number of simultaneous connections. The device serving as the mobility anchor can be specified on the basis of the criteria prioritized for each type of user plane data and the mobility of the UE, and the functions necessary for the PDCP sublayer can be executed. Furthermore, the control device 10 can selectively add functions necessary for the MAC sublayer that processes multi-antenna control, such as CoMP, multiple input multiple output (MIMO), or diversity, or HARQ on the basis of the criteria prioritized for each type of user plane data or the mobility and capability of the UE, and can cause the device serving as the mobility anchor or another device in a distributed manner to execute the functions. Furthermore, in the above-described example, an embodiment in which distribution processing to the plurality of devices is performed in units of sublayers illustrated in Fig. 11 has been described, but the present disclosure is not limited to this example. For example, as illustrated in Fig. 12, distribution processing to the plurality of devices may be performed in units of groups finer than sublayers, or as illustrated in Fig. 13 or 14, distribution processing to the plurality of devices may be performed in units of functions or services.

Furthermore, the distribution control for each type of user plane data may be set for each bandwidth part (BWP). Here, the BWP is a set of continuous physical resource blocks (PRB), and a plurality of BWPs can be set at an arbitrary carrier frequency, and different numerology (subcarrier spacing, symbol duration, cyclic prefix length) can be set for each BPW.

Moreover, the distribution control for each type of user plane data may have the same setting in the downlink and the uplink, or may have different settings independently for the downlink and the uplink, for example, in a case where data of the high speed/large capacity communication service is received in the downlink and data of the high reliability/low latency communication service is transmitted in the uplink. Furthermore, in a case where the terminal device 40 simultaneously receives a plurality of communication services having different types of user plane data, the control device 10 may set different distribution control for each type of user plane data.

### L. Data Format

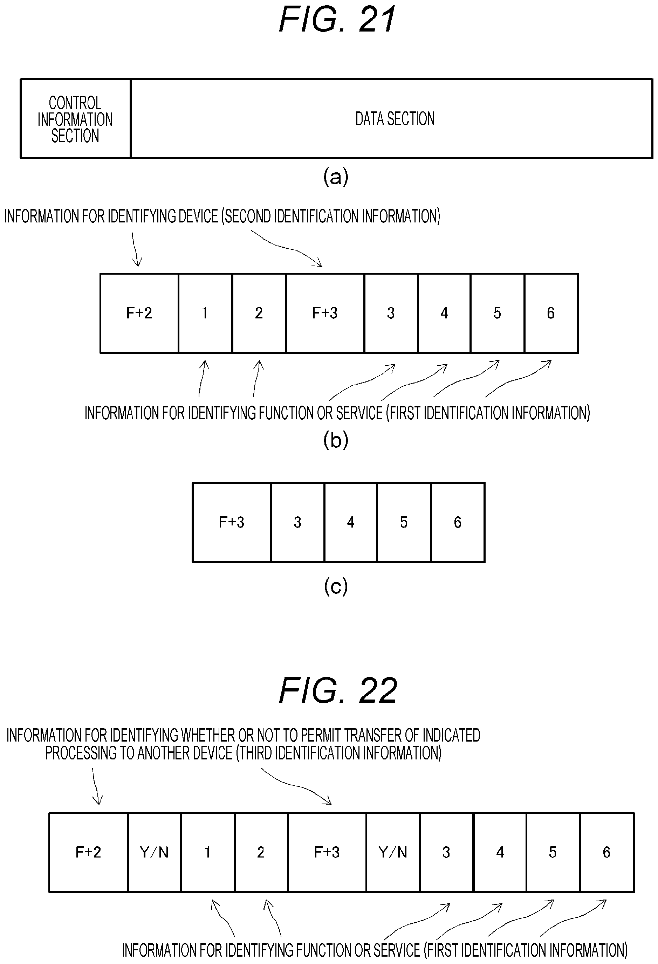

Fig. 21 illustrates an example of a data format. An example of the data format is illustrated. As illustrated in Fig. 21(a), the user plane data transferred from the core network 30 includes a control information section and a data section.

Fig. 21(b) illustrates an example of the configuration of the control information section. The control information section includes information (second identification information) for identifying a device to be subjected to the distribution processing, and information (first identification information) for identifying a function or service processed by each device to be subjected to the distribution processing. Referring to the correspondence between Figs. 15 and 11, the example of the control information section illustrated in Fig. 21(b) indicates that the RU-mounted device 60-2 executes the processing of the SDAP sublayer and the PDCP sublayer on the data of the data section, and the RU-mounted device 60-3 executes the processing of the RLC sublayer, the MAC sublayer, the PHY sublayer, and the RF. That is, the control information section is a means that gives a notification as to which device is caused to execute each processing of a plurality of functions or services necessary for operation as the base station, and can perform control with granularity of data packets.

Furthermore, another example of the control information section illustrated in Fig. 21(c) is, for example, an example of the control information section to be added to data transferred to the RU-mounted device 60-3 after the RU-mounted device 60-2 executes instructed processing of the SDAP sublayer and PDCP sublayer. The RU-mounted device 60-2 deletes the second identification information corresponding to the own device and the first identification information corresponding to the functions or services processed by the own device from the control information section illustrated in Fig. 21(b), and generates the control information section illustrated in Fig. 21(c). Here, an example of the control information section for performing distribution processing in units of sublayers has been described. However, as illustrated in Fig. 12, the control information section may include identification information for performing distribution processing in units of groups finer than sublayers, or as illustrated in Fig. 13 or 14, the control information section may include identification information for performing distribution processing in units of functions or services. The information included in the control information section is terminated between the UPF 330 and the information processing device 50 or each RU-mounted device 60 or between RU-mounted devices 60.

Note that the data section illustrated in Fig. 21(a) is, for example, an SDAP PDU after execution of SDAP sublayer processing, a PDCP PDU after execution of PDCP sublayer processing, an RLC PDU after execution of RLC sublayer processing, or a MAC PDU after execution of MAC sublayer processing. Here, the SDAP PDU is obtained by adding a header including QFI, reflective QoS flow to DRB mapping indication (RDI), and reflective QoS Indication (RQI) to an IP packet of an upper layer which is a QoS flow. The PDCP PDU is obtained by adding a header including a sequence number (SN) or the like to the SDAP PDU of the SDAP sublayer. The RLC PDU is obtained by adding a header including a sequence number (SN), segment information, a segment offset, or the like to the PDCP PDU of the PDCP sublayer. The MAC PDU is obtained by adding a header including a logical channel ID (LCID), a MAC control element (CE), or the like to the RLC PDU of the RLC sublayer. The RU-mounted device 60 can notify the terminal device 40 of the control information required when executing the processing of the MAC sublayer by using the MAC CE. That is, the MAC CE is terminated between the MACs of the device operating as the base station and the terminal device 40.

Furthermore, in a case where a sublayer is defined for each distributed device, the data section illustrated in Fig. 21(a) is a PDU of the sublayer defined for each distributed device. Here, the PDU of each sublayer is obtained by adding a header including a sequence number, segment information, a control element (CE), or the like to a PDU acquired from another device. That is, the PDU of each sublayer may vary according to a method of distributing functions or services required as the operation of the base station to each device. Each device can notify the terminal device 40 of the control information required when executing processing assigned to the device by using the CE. That is, the CE is terminated between each device operating as a part of the base station and the terminal device 40.

The sublayers defined for distributed devices are grouped and managed by a group ID. The sublayer corresponding to each group ID configures a first set of identification information corresponding to one or more functions or services illustrated in Fig. 14. That is, the control device 10 notifies each device that executes the distribution control of the set including the group ID and the first identification information corresponding to the group ID by using the gNB configuration update procedure illustrated in Fig. 17, so that each device can recognize one or more functions or services to be set. Then, the control device 10 or the UPF 330 notifies each device of the control information including the first identification information corresponding to one or more functions or services selected according to the type of the user plane data from among the set including the group ID and the first identification information corresponding to the group ID, so that each device can recognize one or more functions or services selected according to the type of the user plane data, and execute distribution processing.

Fig. 22 illustrates another example of the configuration of the control information section. In addition to Fig. 21(b), third identification information indicating whether or not to permit transfer of each processing indicated by the first identification information to another device is included. In a case where the third identification information is information permitting transfer to another device, each device can transfer each processing indicated by the first identification information to another device. For example, each instructed processing can be transferred to another device according to the margin of the processing capacity of the own device. Here, in a case where each instructed process is transferred to another device, each device can replace the second identification information with information for identifying the transfer destination device.

### M. Procedure 1 of data processing for distribution control by control device

The control device 10 selects a function or service, which needs to be processed by the base station, for each user plane data transmitted and received by the terminal device 40, and adds, as the control information, a set of identification information corresponding to the selected function or service to each user plane data. Here, the set of identification information is generated for each base station or each device operating as a part thereof, and may be generated, for example, in the form of a list including the identification information corresponding to the function or service selected for each device. For example, each device performs setting such that the function or service corresponding to the identification information included in this list can be processed as a container.

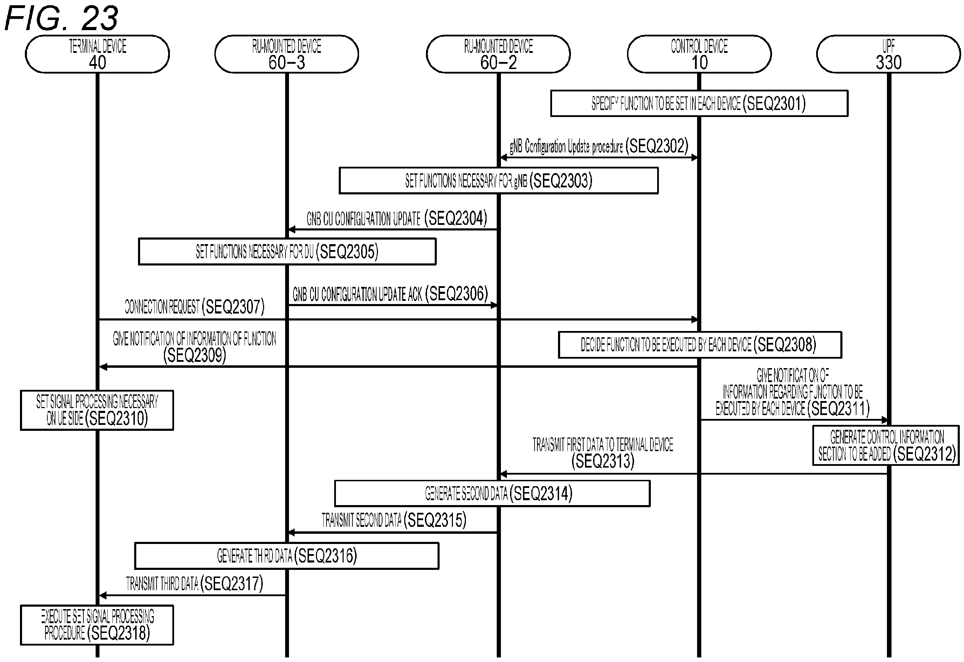

Fig. 23 illustrates an example of a data processing sequence for distribution control by the control device 10. The control device 10 specifies a function to be set in each device (RU-mounted device 60-2, RU-mounted device 60-3) (SEQ2301). For example, the control device 10 decides to set functions (for example, all functions or services of the RLC, MAC, PHY sublayers and RF) necessary for operating as the DU in the RU-mounted device 60-3 and to set functions (for example, all functions or services of SDAP, PDCP, RLC, MAC, PHY sublayers, and RF) necessary for operating as the gNB in the RU-mounted device 60-2. Here, all functions or services of the SDAP, PDCP, RLC, MAC, and PHY sublayers are, for example, the functions or services illustrated in Figs. 13 and 14.

The control device 10 gives an instruct to set functions necessary for the RU-mounted device 60-2 and the RU-mounted device 60-3 by using the gNB configuration update procedure according to the sequence illustrated in Fig. 17 (SEQ2302). Here, the functions necessary for the RU-mounted device 60-2 are functions necessary for operating as the gNB, and the functions necessary for the RU-mounted device 60-3 are functions necessary for operating as the DU.

When receiving the instruction through the gNB configuration update procedure (SEQ2302), the RU-mounted device 60-2 sets functions necessary for operating as the gNB (SEQ2303). Subsequently, the RU-mounted device 60-2 transmits a GNB CU CONFIGURATION UPDATE including an instruction of setting of the functions necessary for operating as the DU to the RU-mounted device 60-3 (SEQ2304) .

When receiving the indication via the GNB CU CONFIGURATION UPDATE, the RU-mounted device 60-3 sets the functions necessary for operating as the DU (SEQ2305) and responds to the RU-mounted device 60-2 with a GNB CU CONFIGURATION UPDATE ACK message (SEQ2306).

Here, the RU-mounted device 60-2 that can operate alone as the gNB can also operate as the CU for the RU-mounted device 60-3 that operates as the DU at the same time. That is, the RU-mounted device 60-2 and the RU-mounted device 60-3 can operate as one base station device 20 in cooperation.

When receiving a connection request from the terminal device 40 (SEQ2307), the control device 10 decides a function to be executed by each device (RU-mounted device 60-2, RU-mounted device 60-3) for each data type addressed to the terminal device 40 according to the processing procedure illustrated in Figs. 18 to 20 (SEQ2308). Here, the function to be executed by the RU-mounted device 60-2 is, for example, processing of the SDAP sublayer and the PDCP sublayer, and the function to be executed by the RU-mounted device 60-3 is processing of the RLC sublayer, the MAC sublayer, the PHY sublayer, and the RF. Note that, in SEQ2307, the terminal device 40 can transmit the connection request via the RU-mounted device 60-2 that can operate alone as the gNB on the basis of default setting.

The control device 10 transmits, to the terminal device 40, a notification of information regarding a function to be executed by each device operating as the base station for data to be transmitted to and received from the terminal device 40 (SEQ2309). This notification may be given in response processing to the connection request of SEQ2307. Here, the connection request of the SEQ2307 includes, for example, single-network slice selection assistance information (S-NSSAI) which is information regarding a network slice, information regarding QoS, a service, or an application, or the like. Therefore, the control device 10 can selectively decide the function to be executed by each device for the data to be transmitted to and received from the terminal device 40 according to the type of user plane data, such as a network slice, QoS, a service, or an application, and can perform distribution processing to a plurality of devices.

When receiving the notification of the information regarding the function to be executed by each device operating as the base station (SEQ2309), the terminal device 40 sets signal processing necessary on the UE side and corresponding to the function or service notification of which is given (SEQ2310). The notification of the information regarding the function to be executed by each device operating as the base station in SEQ2309 includes, for example, information indicating that HARQ is controlled in the MAC sublayer to be processed by RU-mounted device 60-3 operating as the DU.

The control device 10 transmits the notification of the information regarding the function to be executed by each device to the UPF 330 that processes the user plane data (SEQ2311). When receiving the notification of the information regarding the function to be executed by each device in SEQ2311, the UPF 330 generates the control information section to be added to the data addressed to the terminal device 40 (SEQ2312). The control information section to be added to the data addressed to the terminal device 40 is, for example, the control information section illustrated in Fig. 21(b).

The UPF 330 transmits first data including the control information section generated in SEQ2312 to the RU-mounted device 60-2 (SEQ2313). When receiving the first data from the UPF 330, the RU-mounted device 60-2 checks that the second identification information which is included in the control information section of the first data and identifies the device to be subjected to the distribution processing indicates the own device, and selects the processing of the SDAP sublayer and the PDCP sublayer indicated by the first identification information for identifying the function or service to be processed from among the functions of the gNB. Subsequently, the RU-mounted device 60-2 executes the processing of the SDAP sublayer and the PDCP sublayer on the data section of the first data and generates second data (SEQ2314). Here, the control information section of the second data is, for example, the control information section illustrated in Fig. 21(c), and the data section is a PDCP PDU.

The RU-mounted device 60-2 transmits the second data addressed to the terminal device 40 generated in SEQ2314 to the RU-mounted device 60-3 (SEQ2315). When receiving the second data from the RU-mounted device 60-2, the RU-mounted device 60-3 checks that the second identification information which is included in the control information section of the second data and identifies the device to be subjected to the distribution processing indicates the own device, and selects the processing of the RLC sublayer, the MAC sublayer, the PHY sublayer, and the RF indicated by the first identification information for identifying the function or service to be processed from among the set functions.

Subsequently, the RU-mounted device 60-3 executes the processing of the RLC sublayer, the MAC sublayer, the PHY sublayer, and the RF on the data section of the second data and generates third data (SEQ2316). Here, the third data is, for example, data obtained by modulating data in units of transport blocks and assigning the modulated data to resource blocks.

Subsequently, the RU-mounted device 60-3 transmits the generated third data addressed to the terminal device 40 to the terminal device 40 (SEQ2317). When receiving the third data, the terminal device 40 executes the signal processing procedure set in SEQ2310 (SEQ2318) and acquires data from the UPF 330.

According to the above processing procedure, the control device 10 can dynamically change processing, which is necessary in the base station, to be executed in a distributed manner by two or more devices (the RU-mounted device 60 or the information processing device 50-2), and in addition, can change functions or services to be distributed to each device according to the type of data to be transmitted to and received from the terminal device 40. Fig. 23 illustrates a sequence example in which the processing of the SDAP sublayer and the PDCP sublayer is distributed to the RU-mounted device 60-2 and the processing of the RLC sublayer, the MAC sublayer, the PHY sublayer, and the RF is distributed to the RU-mounted device 60-3. According to the type of data, for example, only the processing of the SDAP sublayer can be distributed to the RU-mounted device 60-2, and the processing of the PDCP sublayer, the RLC sublayer, the MAC sublayer, the PHY sublayer, and the RF can be distributed to the RU-mounted device 60-3. Furthermore, although Fig. 23 illustrates the sequence example in which the processing is distributed in units of sublayers, the processing may be distributed in units of groups finer than sublayers as illustrated in Fig. 12, or the processing may be distributed in units of functions or services as illustrated in Fig. 13 or 14. That is, the processing necessary in the base station is processed on a service basis by using a plurality of devices. Note that the above-described dynamic distribution control can be set for each terminal device 40 (UE specific).

Here, the type of data may be, for example, a QoS flow identifier (QFI). That is, the type of data is identified by QFI that classifies QoS flows. In this case, the control device may determine the QFI assigned to the QoS flow, and select, for each device, one or more kinds of processing to be executed by each device of two or more devices from among a plurality of kinds of processing necessary for operating as the base station on the basis of the determined QFI. Additionally or alternatively, the type of data may be a 5G QoS Identifier (5QI) which is a parameter for controlling QoS. Furthermore, the type of data may be S-NSSAI for identifying a network slice. The S-NSSAI includes a slice/service type (SST) and a slice differentiator (SD), and the type of data is determined by only the SST or the SST and the SD. Furthermore, the type of data may be an identification/identifier (ID) for identifying an application started by the terminal device 40. Moreover, the type of data may be determined on the basis of an address (for example, an IP address, a port number, and the like) of a connection destination of the application started by the terminal device 40.

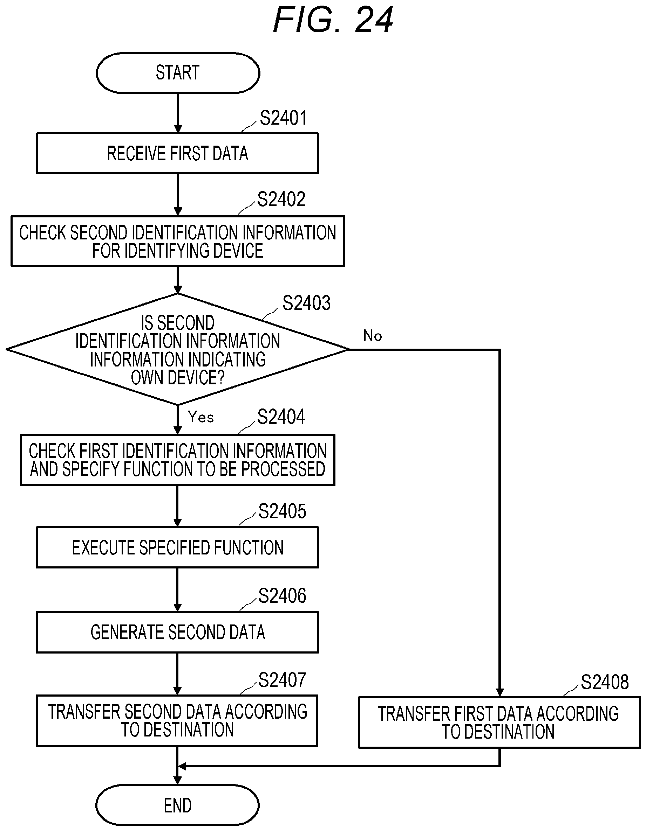

Fig. 24 illustrates an example of a processing procedure in the RU-mounted device 60 in the form of a flowchart.

When receiving the first data (step S2401), the RU-mounted device 60 checks the second identification information for identifying the device included in the control information section of the first data (step S2402), and determines whether or not the second identification information is information indicating the own device (step S2403).

Here, in a case where the second identification information is information indicating the own device (Yes in step S2403), the RU-mounted device 60 checks the first identification information included in the control information section of the first data and specifies a function or service to be processed by the own device (step S2404). The specified function or service described herein is, for example, processing of the SDAP sublayer and the PDCP sublayer. Then, the RU-mounted device 60 executes the function (the processing of SDAP sublayer and PDCP sublayer) specified in the preceding step S2404 (step S2405), and generates second data (step S2406). Then, the RU-mounted device 60 transfers the generated second data according to the destination (step S2407), and ends this processing.

On the other hand, in a case where the second identification information is not the information indicating the own device (No in step S2403), the RU-mounted device 60 directly transfers the first data according to the destination (step S2408), and ends this processing.

In this section M, an embodiment has been described in which the control device 10 sets devices that operate as the CU, the DU, and the RU and functions or services to be processed by respective devices on the basis of the types of user plane data. However, the present disclosure is not limited to this embodiment. For example, the control device 10 may perform control such that a device that operates as the CU and a function or service to be processed by the device are set on the basis of the type of the user plane data, and subsequently the device that operates as the CU sets devices that operate as the DU and the RU, and functions or services to be processed by respective device on the basis of the type of the user plane data.

### N. Procedure 2 of data processing for distribution control by control device

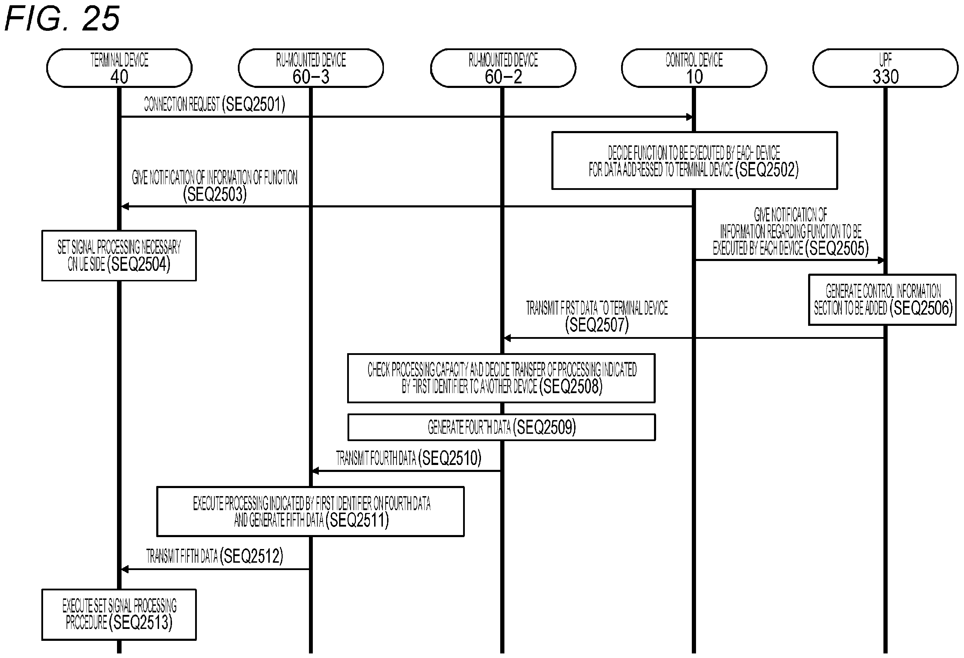

Fig. 25 illustrates another example of the data processing sequence for the distribution control by the control device 10. Here, it is assumed that functions necessary for operating as the gNB are set in the RU-mounted device 60-2 and the RU-mounted device 60-3.

When receiving a connection request from the terminal device 40 (SEQ2501), the control device 10 decides a function to be executed by each device (RU-mounted device 60-2, RU-mounted device 60-3) for data addressed to the terminal device 40 according to the processing procedure illustrated in Figs. 18 to 20 (SEQ2502). Here, the function to be executed by the RU-mounted device 60-2 is, for example, processing of the SDAP sublayer and the PDCP sublayer, and the function to be executed by the RU-mounted device 60-3 is processing of the RLC sublayer, the MAC sublayer, the PHY sublayer, and the RF.

The control device 10 transmits, to the terminal device 40, a notification of information regarding a function to be executed by each device operating as the base station for data to be transmitted to and received from the terminal device 40 (SEQ2503). When receiving the notification of the information regarding the function to be executed by each device operating as the base station in SEQ2503, the terminal device 40 sets signal processing necessary on the UE side and corresponding to the function or service notification of which is given (SEQ2504).

Subsequently, the control device 10 transmits the notification of information regarding the function to be executed by each device to the UPF 330 that processes the user plane data (SEQ2505). When receiving the notification of the information regarding the function to be executed by each device in SEQ2505, the UPF 330 generates the control information section to be added to the data addressed to the terminal device 40 (SEQ2506). Here, the control information section to be added to the data addressed to the terminal device 40 is, for example, the control information section illustrated in Fig. 22, and includes the third identification information indicating permission to transfer the function to be executed by the RU-mounted device 60-2 to another device for execution.

Subsequently, the UPF 330 transmits the first data including the control information section generated in SEQ2506 to the RU-mounted device 60-2 (SEQ2507).

When receiving the first data in SEQ2507, the RU-mounted device 60-2 checks that the second identification information which is included in the control information section of the first data and identifies the device to be subjected to the distribution processing indicates the own device, and selects the processing of the SDAP sublayer and the PDCP sublayer indicated by the first identification information for identifying the function or service to be processed from among the functions of the gNB.

Moreover, the RU-mounted device 60-2 checks the third identification information included in the control information section and grasps that the processing of the SDAP sublayer and the PDCP sublayer indicated by the first identification information is the processing permitted to be transferred to another device for execution. Then, for example, the RU-mounted device 60-2 checks the margin of the processing capacity of the own device, and in a case where it is determined that the margin is not sufficient, it is decided to transfer the processing of the SDAP sublayer and the PDCP sublayer indicated by the first identification information to the RU-mounted device 60-3 (SEQ2508).

Further, the RU-mounted device 60-2 specifies a device to which the processing of the SDAP sublayer and the PDCP sublayer indicated by the first identification information is transferred, generates fourth data including identification information in which the second identification information is updated to information for identifying the specified device (SEQ2509), and transmits the generated fourth data to the RU-mounted device 60-3 (SEQ2510) .

When receiving the fourth data addressed to the terminal device 40 generated by the RU-mounted device 60-2 in SEQ2510, the RU-mounted device 60-3 checks that the second identification information which is included in the control information section of the fourth data and identifies the device to be subjected to the distribution processing indicates the own device, and selects the processing of the SDAP sublayer, the PDCP sublayer, the RLC sublayer, the MAC sublayer, the PHY sublayer, and the RF indicated by the first identification information for identifying the function or service to be processed from among the set functions. Here, the processing of the SDAP sublayer and the PDCP sublayer is the processing transferred from the RU-mounted device 60-2.

Subsequently, the RU-mounted device 60-3 executes the processing of the SDAP sublayer, the PDCP sublayer, the RLC sublayer, the MAC sublayer, the PHY sublayer, and the RF on the data section of the fourth data and generates fifth data (SEQ2511). Here, the fifth data is, for example, data obtained by modulating data in units of transport blocks and assigning the modulated data to resource blocks. Then, the RU-mounted device 60-3 transmits the generated fifth data addressed to the terminal device 40 to the terminal device 40 (SEQ2512).

When receiving the fifth data in SEQ2512, the terminal device 40 executes the signal processing procedure set in SEQ717 (SEQ2513) and acquires data from the UPF 330.

According to the above processing procedure, the control device 10 can dynamically change processing, which is necessary for the base station, to be executed in a distributed manner by one or more devices (the RU-mounted device 60 or the information processing device 50-2) according to the type of data to be transmitted to and received from the terminal device 40, and in addition, can flexibly change distribution processing according to the situation of the device to be subjected to the distribution processing. Fig. 25 illustrates a sequence example in which all processing (the processing of the SDAP sublayer and the PDCP sublayer) permitted to be transferred by the RU-mounted device 60-2 to another device for execution is transferred to another device (RU-mounted device 60-3), but the present disclosure is not limited to this example. For example, the RU-mounted device 60-2 may execute a part of the processing (the processing of the SDAP sublayer) and transfer the other part of the processing (the processing of the PDCP sublayer) to another device (RU-mounted device 60-3) according to the margin of the processing capacity of the own device. Furthermore, although Fig. 25 illustrates the sequence example in which the processing is distributed in units of sublayers, the processing may be distributed in units of groups finer than sublayers as illustrated in Fig. 12, or the processing may be distributed in units of functions or services as illustrated in Fig. 13 or 14.

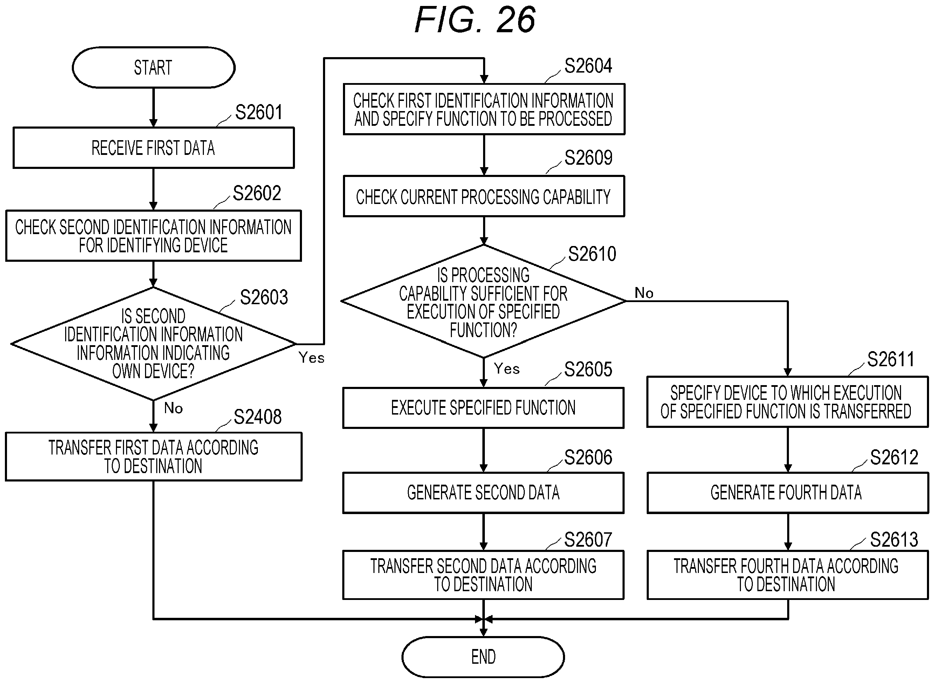

Fig. 26 illustrates another example of the processing procedure in the RU-mounted device 60 in the form of a flowchart.

When receiving the first data (step S2601), the RU-mounted device 60 checks the second identification information for identifying the device included in the control information section of the first data (step S2602), and determines whether or not the second identification information is information indicating the own device (step S2603).

Here, in a case where the second identification information is information indicating the own device (Yes in step S2603), the RU-mounted device 60 checks the first identification information included in the control information section of the first data and specifies a function or service to be processed by the own device (step S2604). Here, the specified function or service is, for example, processing of the SDAP sublayer and the PDCP sublayer. Moreover, the RU-mounted device 60 checks the current processing capacity (step S2609) and determines whether the current processing capacity has sufficient margin to process the specified function or service (step S2610).

In a case where it is determined that there is sufficient margin to process the specified function or service (Yes in step S2610), the RU-mounted device 60 executes the specified function (the processing of the SDAP sublayer and the PDCP sublayer) (step S2605) and generates second data (step S2606). Then, the RU-mounted device 60 transfers the generated second data according to the destination (step S2607), and ends this processing.

On the other hand, in a case where it is determined that there is not sufficient margin to process the specified function (No in step S2610), the RU-mounted device 60 specifies a device to which the execution of the specified function (the processing of the SDAP sublayer and the PDCP sublayer) is transferred (step S2611). For example, the RU-mounted device 60 specifies another RU-mounted device 60 that executes the processing of the SDAP sublayer and the PDCP sublayer. Subsequently, the RU-mounted device 60 generates fourth data (step S2612). Here, the generation of the fourth data is realized by updating the information regarding the mapping between the first identification information and the second identification information included in the control information section of the first data to the information regarding the mapping between the first identification information corresponding to the function (the processing of the SDAP sublayer and the PDCP sublayer) decided to transfer and the second identification information for identifying the device to be the transfer destination. Then, the RU-mounted device 60 transfers the generated fourth data according to the destination (step S2613), and ends this processing.

Furthermore, in a case where the second identification information is not information indicating the own device (No in step S2603), the RU-mounted device 60 directly transfers the first data according to the destination (step S2608), and ends the processing.

Here, the "processing capacity" determined in step S2610 is an example of a condition, and the present disclosure is not limited to this embodiment. For example, a transmission delay between the RU-mounted device 60 and the terminal device 40 may be used as a condition. The RU-mounted device 60 may check a current transmission delay with the terminal device 40 in step S2609 and determine the transmission delay in step S2610. In a case where the transmission delay is equal to or more than a threshold value (for example, PDB), a device to which the execution of the specified function is transferred may be specified, or resetting of the distribution control may be requested to the control device 10.

### O. Procedure 3 of data processing for distribution control by control device

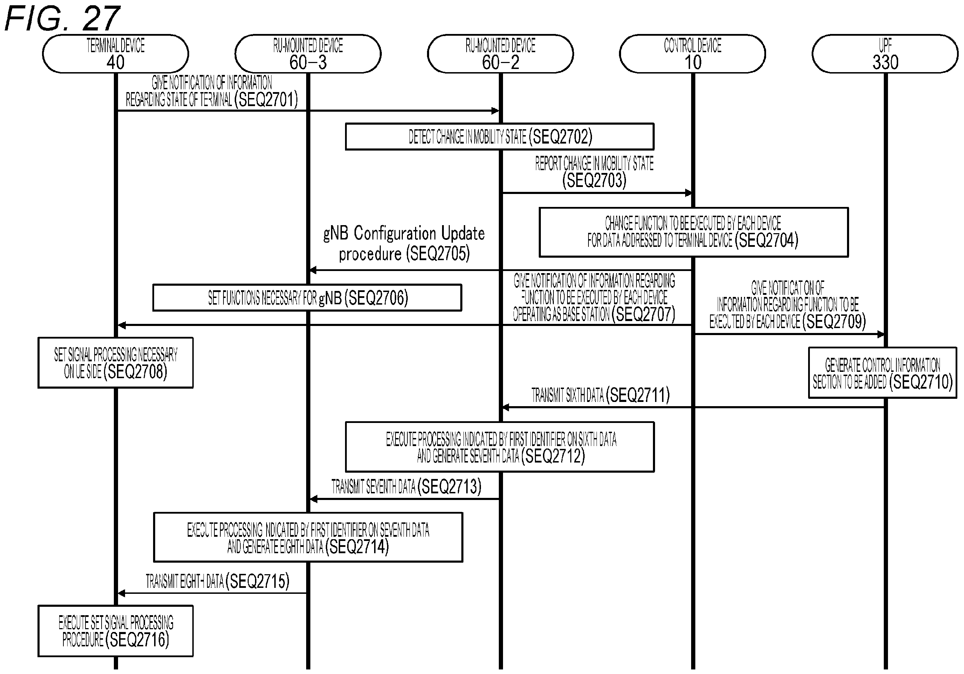

Fig. 27 illustrates still another example of the data processing sequence for the distribution control by the control device 10. Here, it is assumed that the terminal device 40 receives data of the high reliability/low latency communication service from the UPF 330, and the control device 10 sets functions (all functions or services of RLC, MAC, PHY sublayers and RF) necessary for operating as the DU in the RU-mounted device 60-3 according to mobility, and sets functions (all functions or services of SDAP and PDCP sublayers) necessary for operating as the CU in the RU-mounted device 60-2.

The terminal device 40 notifies the RU-mounted device 60-2 operating as the CU of the state related to the information of the terminal (SEQ2701). The notification of the state related to the information of the terminal is, for example, a measurement report.

When receiving the notification of the state related to the information of the terminal in SEQ2701, the RU-mounted device 60-2 detects a change in the mobility state of terminal device 40 (SEQ2702), and reports the detected change in the mobility state to the control device 10 (SEQ2703).

When receiving the report of the change in the mobility state in SEQ2703, the control device 10 determines that the mobility of the terminal device 40 is low and changes the function to be executed by each device for the data addressed to the terminal device 40 (SEQ2704). For example, the control device 10 decides to cause the RU-mounted device 60-3, which is a device close to the terminal device 40, to process all functions or services of the PDCP sublayer being processed by the RU-mounted device 60-2 and further to add the duplication processing for improving reliability. Here, the reason why the device close to the terminal device 40 is caused to execute the PDCP sublayer is that the device close to the terminal device 40 is caused to process the duplication processing for improving reliability in consideration of the delay and reliability which are criteria of the high reliability/low latency communication service.

By using the gNB configuration update procedure, the control device 10 instructs the RU-mounted device 60-3 to set functions (for example, all functions or services of SDAP, PDCP, RLC, MAC, PHY sublayers and RF) necessary for operating as the gNB (SEQ2705). When receiving the instruction through the gNB configuration update procedure in SEQ2705, the RU-mounted device 60-3 sets functions necessary for operating as the gNB (SEQ2706) .

Moreover, the control device 10 transmits, to the terminal device 40, a notification of information regarding the function to be executed by each device (RU-mounted device 60-2, RU-mounted device 60-3) operating as the base station for data to be transmitted to and received from the terminal device 40 (SEQ2707). When receiving the notification of the information regarding the function to be executed by each device operating as the base station in SEQ2707, the terminal device 40 sets signal processing necessary on the UE side and corresponding to the notified function or service (SEQ2708) .

Subsequently, the control device 10 transmits the notification of information regarding the function to be executed by each device to the UPF 330 that processes the user plane data (SEQ2709). When receiving the notification of the information regarding the function to be executed by each device in SEQ2709, the UPF 330 generates the control information section to be added to the data addressed to the terminal device 40 (SEQ2710). Then, the UPF 330 transmits sixth data including the control information section generated in SEQ2710 to the RU-mounted device 60-2 (SEQ2711).

When receiving the sixth data in SEQ2711, the RU-mounted device 60-2 checks that the second identification information which is included in the control information section of the sixth data and identifies the device to be subjected to the distribution processing indicates the own device, and selects the processing of the SDAP sublayer indicated by the first identification information for identifying the function or service to be processed from among the functions of the gNB. Subsequently, the RU-mounted device 60-2 executes the processing of the SDAP sublayer on the data section of the sixth data and generates seventh data (SEQ2712). Then, the RU-mounted device 60-2 transmits the seventh data addressed to the terminal device 40 generated in SEQ2712 to the RU-mounted device 60-3 (SEQ2713).

When receiving the seventh data in SEQ2713, the RU-mounted device 60-3 checks that the second identification information which is included in the control information section of the seventh data and identifies the device to be subjected to the distribution processing indicates the own device, and selects the processing of the PDCP sublayer, the RLC sublayer, the MAC sublayer, the PHY sublayer, and the RF indicated by the first identification information for identifying the function or service to be processed from among the set functions. Subsequently, the RU-mounted device 60-3 executes the processing of the PDCP sublayer, the RLC sublayer, the MAC sublayer, the PHY sublayer, and the RF on the data section of the seventh data, and generates eighth data (SEQ2714). Here, the eighth data is, for example, data obtained by modulating data in units of transport blocks and assigning the modulated data to resource blocks.

The RU-mounted device 60-3 transmits the eighth data addressed to the terminal device 40 generated in SEQ2714 to the terminal device 40 (SEQ2715). When receiving the eighth data, the terminal device 40 executes the signal processing procedure set in SEQ2708 (SEQ2716) and acquires data from the UPF 330.

Note that in a case where the control device 10 having received the report of the change in the mobility state in SEQ2703 detects the necessity of handover, the control device instructs the RU-mounted device 60-2 to execute processing necessary for handover.

For example, in a case where the RU-mounted device 60-3 is changed to another RU-mounted device 60 on the basis of the measurement report, the RU-mounted device 60-2 issues a handover request message to the another target RU-mounted device 60. When a handover request acknowledge message is received as a response from the another RU-mounted device 60, the RU-mounted device 60-2 requests the control device 10 to change the RU-mounted device 60-3 to the another RU-mounted device 60. When the control device 10 accepts that the RU-mounted device 60-3 is changed to the another RU-mounted device 60, according to the sequence illustrated in Fig. 17, the control device gives, via the RU-mounted device 60-2, an instruction to set functions necessary for the another RU-mounted device 60 by using the gNB configuration update procedure. When receiving the GNB CU CONFIGURATION UPDATE ACK message from the another RU-mounted device 60, the RU-mounted device 60-2 instructs the RU-mounted device 60-3 to be a source to execute handover processing. The RU-mounted device 60-3 receiving the instruction to execute the handover processing instructs the terminal device 40 to execute the handover to the another RU-mounted device 60, and the terminal device 40 executes the connection processing with the another RU-mounted device 60. When the connection process with the terminal device 40 is successful, the another RU-mounted device 60 reports completion of the handover to the control device 10 via the RU-mounted device 60-2, and the control device 10 notifies the UPF 330 that processes the user plane data of update of the information regarding the function to be executed by each device.

Furthermore, in a case where the handover involving the change of the RU-mounted device 60-2 is executed on the basis of the measurement report, the control device 10 executes change processing of the RU-mounted device 60-2 prior to the handover processing described above. For example, in a case where the RU-mounted device 60-2 is changed to the information processing device 50-2, an instruction to set functions necessary for the information processing device 50-2 is given by using the gNB configuration update procedure according to the sequence illustrated in Fig. 17. When setting of the necessary functions in the information processing device 50-2 is completed, the control device 10 instructs the information processing device 50-2 to execute processing necessary for handover.

According to the above processing procedure, the control device 10 can dynamically change the processing, which is necessary in the base station, to be executed in a distributed manner by one or more devices (the RU-mounted device 60 and the information processing device 50-2) according to the state of the terminal device 40. Fig. 27 illustrates a sequence example of control according to the mobility of the terminal device 40, but the present disclosure is not limited to this example. The control device 10 can acquire various types of information other than the information regarding mobility from the terminal device 40 or the device (the RU-mounted device 60 or the information processing device 50-2) to be subjected to the distribution processing. The various types of information described herein are, for example, information regarding capability such as a frequency band supported by the RU included in the RU-mounted device 60, the number of transceivers, an antenna configuration, a CPU configuration, processing capacity, and performance. Furthermore, the various types of information can include information regarding a state (status) such as a processing load of the device to be subjected to the distribution processing, information regarding communication quality measured by the terminal device 40 or the device to be subjected to the distribution processing, statistical information thereof, a parameter for controlling wireless communication, and the like. Moreover, the various types of information can include a power consumption amount and a power unit price, which change from moment to moment, of the terminal device 40 and the device to be subjected to the distribution processing Then, the control device 10 can extract the optimum setting of the distribution control according to the type of the user plane data from the information acquired from the various devices by utilizing artificial intelligence (AI) represented by machine learning (ML) and deep learning (DL). The control device 10 can learn a neural network model and a deep neural network model using the information acquired from the various devices described above, and use, as the optimal setting of the distribution control, the output result acquired by inputting the type of user plane data or the information acquired from the various devices in the learned model. That is, the control device 10 can perform the distribution control of the processing necessary for the operation of the base station in a data-driven form according to the type of user plane data and the information acquired from various devices.

Moreover, in this distribution control in a data-driven form, it is assumed that dynamic control is required. In a case where the setting of the distribution control for each user plane data is changed by using signaling to each device to be subjected to the distribution processing as a part of the base station device, there is a concern about an increase in the load of signaling to the control device 10 and each device. Therefore, by reflecting the information regarding the setting of the dynamic distribution control in the control information section included in each piece of data of the user plane data, it is possible to reduce the load of signaling to each device described above.

In this section O, a sequence example has been described in which the control device 10 sets devices that operate as the CU, the DU, and the RU and functions or services to be processed by respective devices on the basis of the information regarding the state of the terminal, but the present disclosure is not limited to this example. For example, the control device 10 may perform control such that a device that operates as the CU and a function or service to be processed by the device are set on the basis of the type of the user plane data, and the device that operates as the CU sets device that operate as the DU and the RU, and functions or services to be processed by respective devices on the basis of the type of the user plane data and information regarding the state of the terminal.

### P. Notification method of setting for distribution control by control device

A procedure of data processing for dynamic distribution control in units of sublayers (Fig. 11), units of groups finer than sublayers (Fig. 12), and units of functions or services (Fig. 13 or 14) has been described above. Next, a method for reducing information of the control information section included in each piece of data of the user plane data will be described.

For example, the functions or services illustrated in Fig. 13 can be classified into processing to be executed in common regardless of the type of the user plane data (for example, "mapping of QoS flows and data radio bearers" of the SDAP sublayer, "mapping to physical resources" of the PHY sublayer, or the like) and processing to be executed selectively according to the type of the user plane data (for example, "coordination control by CoMP" of the MAC sublayer, or the like.). Therefore, a method of statically giving a notification of processing to be executed in common regardless of the type of the user plane data and dynamically giving a notification of processing executed selectively according to the type of the user plane data is considered. The static notification to each device is performed via an application protocol message, and the dynamic notification to each device is performed via the control information section included in each data. According to this notification method, it is possible to perform the control of the dynamic distribution processing according to the type of data to be transmitted to and received from the terminal device 40, and, in addition, to reduce the data size of the control information section added to each data. Here, for example, in the function setting procedure of the RU, the DU, and the CU illustrated in Fig. 17, each device is notified of information regarding classification of the processing to be executed in common regardless of the type of the user plane data and the processing to be executed selectively according to the type of the user plane data. Furthermore, the control device 10 can dynamically change the processing to be executed in common regardless of the type of the user plane data. When the processing to be executed in common regardless of the type of the user plane data is changed, for each device to be subjected to the distribution processing, the control device 10 updates the information regarding the classification of the processing to be executed in common regardless of the type of the user plane data and the processing to be executed selectively according to the type of the user plane data by using the gNB configuration update procedure via the application protocol message. Moreover, for the terminal device 40, the control device 10 updates the information regarding the classification of the processing to be executed in common regardless of the type of the user plane data and the processing to be executed selectively according to the type of the user plane data by using a NAS message.

### Q. distribution control according to setting of PHY sublayer

For example, the control device 10 controls which function each of the DU and the RU has depending on what communication the terminal device 40 performs.

For example, in the case of a terminal device that requires large-capacity and high-speed communication, it is considered that the base station device increases the number of antennas used for transmission and performs MIMO communication of a plurality of layers. In a case where the DU has the function of the PHY sublayer and the RU has the function of the RF, the transmission speed of the fronthaul increases as the number of transmission antennas and the number of transmission layers increase, and thus it is desirable to set the function of the PHY layer in the RU that is the device closest to the terminal device 40. Alternatively, the control device 10 may control the CU and the UPF 330 to connect the terminal device 40 to the DU (RU-mounted device 60) in which the function of the processing of the PHY sublayer are set.

On the other hand, for example, in the case of the terminal device 40 that requires power-saving communication and does not require large-capacity and high-speed communication, it is considered that the base station device performs single-layer communication with a single antenna. In this case, it is considered that there is no increase in the transmission speed of the fronthaul, and thus by setting only the function of the RF in the device (for example, the RU) closest to the terminal device 40, the processing of the PHY sublayer or higher can be performed in the DU.

Furthermore, in a case where coverage enhancement is required, transmission/reception diversity using a plurality of antennas is effective. For example, in a case where the RU has all functions of the PHY layer, the terminal device 40 can only perform transmission/reception diversity with that RU. That is, since transmission/reception diversity using a plurality of RUs cannot be used, a site diversity effect cannot be obtained. For example, in a case where further coverage enhancement is requested, by applying transmission/reception diversity using a plurality of RUs, a site diversity effect can be obtained, and further coverage enhancement can be expected. In this case, it is considered to perform control such that functions up to before the modulation function of the PHY layer are set in the DU, and functions from the modulation function to the RF are set in the RU. For example, this control may be replaced with control in which CoMP communication is not performed and control in which CoMP communication is performed.

As described above, it is possible to perform control to dynamically change the functions set in the DU and the RU according to the communication requested by the terminal device 40. Here, the dynamic function setting is performed, for example, according to the function setting procedure of the RU, the DU, and the CU illustrated in Fig. 17.

For example, this setting in the distribution control may be performed on the basis of a communication band or a communication resource. Specifically, in a communication band A and a communication resource A, the RU has the function of only the RF, and the DU has the functions of the PHY layer or higher. On the other hand, in a communication band B and a communication resource B, the RU has the functions of the PHY layer and the RF, and the DU has the functions of the MAC layer or higher. Here, the communication band may include a component carrier (CC), a BWP, or the like. The communication resource may include resources such as a resource element, a resource block, a symbol, a slot, a subframe, and a radio frame, and information of a subcarrier interval necessary for these configurations.

For example, this setting may include default setting. For example, it is assumed that the RU has the function of only the RF in a normal state, and the DU has the function of the PHY layer or higher. Here, in a case where the terminal device 40 that requests large capacity communication using a plurality of antennas and a plurality of layers is connected to the RU, the CU may control the setting of the DU and the RU such that the RU selects the setting having the functions of the PHY layer and the RF and the DU selects the setting having the functions of the MAC layer or higher. In a case where the terminal device 40 requesting large capacity communication is detached, the CU gives, to the DU and the RU, a notification to control the default setting such that the RU selects the setting having the functions of the RF, and the DU selects the setting having the functions of the PHY layer or higher.

For example, functions of the DU or the RU may be fixed in a specific communication band. The specific communication band is, for example, a communication band used for initial connection. In the specific communication band, for example, the DU necessarily has the functions of the PHY layer or higher, the RU may have only the functions of the RF, or the like, or default setting may be used.

For example, a trigger related to this setting change of the distribution control may be set. For example, it is considered to change to predetermined setting in a case where the communication quality becomes equal to or less than a predetermined value.

For example, this distribution control setting may be performed at the time of handover. For example, in a case where the terminal device 40 is connected to the RU having the functions of the PHY layer and the RF and tries to handover to the RU having only the function of the RF, the DU may notify the RU as a target of an instruction for selecting setting having the functions of the PHY sublayer. The RU that has received this notification changes from a state where the functions of only the current RF are selected to a state where the functions having the PHY sublayer and the RF are selected. After this setting control, the RU as a source notifies the terminal device 40 of a handover command, and the terminal device 40 performs handover to the RU of the target. At this time, the RU of the source may perform control to select the setting having the functions of only the RF after the terminal device 40 performs the handover, or may perform control to maintain the setting having the functions of the PHY layer and the RF as it is. Furthermore, the DU may perform control to select which layer of processing the DU performs according to which RU the DU communicates with.

Although the embodiment in which the functions set in the DU and the RU are dynamically controlled according to the setting of the PHY sublayer has been described above, in the dynamic distribution control, the control may be performed such that the functions to be processed by the DU or the RU can be selected according to the type of the user plane data. For example, the DU and the RU may be set in advance to process the same functions, and the control may be performed on the basis of the information included in the control information section included in the received data such that the DU or the RU selects and executes the processing of the functions.

### R. Effects

According to the embodiment described in the present specification, it is possible to dynamically change the processing, which is necessary in the base station, to be executed in a distributed manner by two or more devices, and in addition, it is possible to change functions or services to be distributed to each device according to the type of data to be transmitted to and received from the terminal device.

### INDUSTRIAL APPLICABILITY

The present disclosure has been described in detail with reference to the specific embodiment. However, it is obvious that those skilled in the art can make modifications and substitutions of the embodiments without departing from the gist of the present disclosure.

In this specification, the embodiment in which the present disclosure is applied to 5GS has been mainly described, but the gist of the present disclosure is not limited thereto. The present disclosure can be applied to various types of wireless communication systems capable of causing two or more devices to execute the functions of a base station in a distributed manner, so that functions or services to be distributed to each device can be changed according to the types of data to be transmitted to and received from a terminal device.

In short, the present disclosure has been described in an illustrative manner, and the contents described herein should not be interpreted in a limited manner. In order to determine the gist of the present disclosure, the claims should be taken into consideration.

Note that, the present disclosure may also have the following configurations.

(1) A control device including:
   a determination unit that determines a type of data to be transmitted to and received from a terminal device;
   a processing selection unit that selects, for each device, one or more kinds of processing to be executed by each device of two or more devices from among a plurality of kinds of processing necessary for operating as a base station on the basis of the determined type of the data; and
   a processing setting unit that sets each device of the two or more devices such that each device of the two or more devices is able to execute, on the received data, the one or more kinds of processing selected on the basis of the type of the data.
(2) The control device according to (1), in which the processing setting unit sets processing necessary for operating as a CU in a first device among the two or more devices, and sets processing necessary for operating as a DU in a second device other than the first device among the two or more devices.
(3) The control device according to (2), in which
   the processing setting unit further sets processing necessary for operating as an RU in the second device.
(4) The control device according to (2) or (3), in which
   the processing setting unit sets processing necessary for an operation as the RU in a third device among the two or more devices.
(5) The control device according to any one of (2) to (4), in which
   the processing selection unit selects, on the basis of the determined type of the data, one or more kinds of first processing to be executed by the first device from among the processing necessary for operating as the CU and one or more kinds of second processing to be executed by the second device from among the processing necessary for operating as the DU.
(6) The control device according to (5), further including:
   a management unit that manages first identification information for identifying each of the plurality of kinds of processing necessary for operating as the base station and second identification information for identifying each of the two or more devices; and
   a control information setting unit that sets, on the basis of the determined type of the data, a first association in which the second identification information corresponding to the first device and the first identification information corresponding to the first processing selected by the processing selection unit are associated with each other and a second association in which the second identification information corresponding to the second device and the first identification information corresponding to the second processing selected by the processing selection unit are associated with each other.
(7) The control device according to (6), further including
   an information providing unit that provides, to a function of a core network that processes user plane data, the first association and the second association set by the control information setting unit.
(8) The control device according to (6), further including
   a notification unit that issues a message for notifying each device of the two or more devices of an instruction, in which
   the processing selection unit separates, from the first processing, third processing which does not depend on the determined type of the data and fourth processing which depends on the determined type of the data, and
   the notification unit notifies the first device of an instruction to execute the third processing on the received data by using the message, and notifies the first device of an instruction to execute the fourth processing on the received data by using the first association set by the control information setting unit.
(9) A device that operates as a base station, including:
   an acquisition unit that acquires, from a control device, information regarding setting of a plurality of kinds of processing necessary for operating as the base station, and acquires control information and data generated by a device of a core network that processes user plane data;
   a processing setting unit that sets the plurality of kinds of processing on the basis of the information regarding the setting of the plurality of kinds of processing necessary for operating as the base station; and
   a processing selection unit that selects, on the basis of the control information, processing to be executed on the data from among the plurality of kinds of processing set by the processing setting unit.
(10) The device according to (9), in which
   the control information includes first identification information for identifying each of the plurality of kinds of processing, and
   the processing selection unit selects, on the basis of the first identification information, the processing to be executed on the data from among the plurality of kinds of processing set by the processing setting unit.
(11) The device according to (10), in which
   the control information includes second identification information for identifying each of devices in which one or more of the plurality of kinds of processing necessary for operating as the base station are set, and
   in a case where the second identification information indicates an own device, the processing selection unit selects, on the basis of the first identification information, the processing to be executed on the data from among the plurality of kinds of processing set by the processing setting unit.
(12) The device according to (11), in which
   the processing selected by the processing selection unit is executed to generate second data.
(13) The device according to any one of (9) to (12), in which
   the processing setting unit sets processing necessary for operating as a CU.
(14) The device according to any one of (9) to (12), in which
   the processing setting unit sets processing necessary for operating as a DU.
(15) The device according to any one of (9) to (12), in which
   the processing setting unit sets processing necessary for operating as an RU.
(16) The device according to (11), in which
   the acquisition unit further acquires, from the control device, a message including a set of one or more pieces of the first identification information corresponding to the processing to be executed on the data independently of the control information, and
   the processing selection unit further selects one or more kinds of processing corresponding to the first identification information included in the set.
(17) The device according to (11), in which
   the control information includes third identification information regarding permission to transfer execution of one or more kinds of processing corresponding to the first identification information to another device, the device further including:
   a device specifying unit that specifies another device in a case where the third identification information corresponding to the processing, which is to be executed on the data, selected by the processing selection unit is information indicating permission of transfer to the another device; and
   a control information update unit that updates the second identification information corresponding to the first identification information of the processing included in the control information to second identification information corresponding to the another device specified by the device specifying unit.
(18) The device according to (9), in which
   the acquisition unit further acquires information necessary for acquiring software that executes the plurality of kinds of processing, and
   the processing setting unit acquires and implements the software from another device on the basis of the information necessary for acquiring the software.
(19) A control method for causing two or more devices to operate as a base station, the control method including:
   a determination step of determining a type of data to be transmitted to and received from a terminal device;
   a process selection step of selecting, for each device, one or more kinds of processing to be executed by each device of the two or more devices from among a plurality of kinds of processing necessary for operating as the base station on the basis of the determined type of the data; and
   a process setting step of setting each device of the two or more devices such that each device of the two or more devices is able to execute, on the received data, the one or more kinds of processing selected on the basis of the type of the data.
(20) A processing method which is executed in a device operating as a base station, the method including:
   an acquisition step of acquiring, from a control device, information regarding setting of a plurality of kinds of processing necessary for operating as the base station, and acquires control information and data generated by a device of a core network that processes user plane data;
   a process setting step of setting the plurality of kinds of processing on the basis of the information regarding the setting of the plurality of kinds of processing necessary for operating as the base station; and
   a process selection step of selecting, on the basis of the control information, processing to be executed by the device on the data from among the plurality of kinds of processing set by the process setting step.

### REFERENCE SIGNS LIST

- 10: Control device
- 20: Base station device
- 30: Core network
- 100: Wireless communication system
- 200: Wireless communication system
- 40: Terminal device
- 41: Wireless communication unit
- 411: Reception processing unit
- 411a: Wireless reception unit
- 411b: Demultiplexing unit
- 411c: Demodulation unit
- 411d: Decoding unit
- 412: Transmission processing unit
- 412a: Encoding unit
- 412b: Modulation unit
- 412c: Multiplexing unit
- 412d: Wireless transmission unit
- 413: Antenna
- 42: Storage unit
- 43: Control unit
- 431: Acquisition unit
- 432: Data processing setting unit
- 44: Information processing unit
- 50: Information processing device
- 52: Storage unit
- 53: Control unit
- 531: Acquisition unit
- 532: Virtualization control unit
- 533: Data processing control unit
- 54: Information processing unit
- 55: Network communication unit
- 60: RU-mounted device
- 61: Wireless communication unit
- 611: Reception processing unit
- 611a: Wireless reception unit
- 611b: Demultiplexing unit
- 611c: Demodulation unit
- 611d: Decoding unit
- 612: Transmission processing unit
- 612a: Encoding unit
- 612b: Modulation unit
- 612c: Multiplexing unit
- 612d: Wireless transmission unit
- 613: Antenna
- 62: Storage unit
- 63: Control unit
- 631: Acquisition unit
- 632: Virtualization control unit
- 633: Data processing control unit
- 64: Information processing unit
- 65: Network communication unit

## Claims

1. A control device comprising:
a determination unit that determines a type of data to be transmitted to and received from a terminal device;
a processing selection unit that selects, for each device, one or more kinds of processing to be executed by each device of two or more devices from among a plurality of kinds of processing necessary for operating as a base station on a basis of the determined type of the data; and
a processing setting unit that sets each device of the two or more devices such that each device of the two or more devices is able to execute, on the received data, the one or more kinds of processing selected on a basis of the type of the data.

2. The control device according to claim 1, wherein
the processing setting unit sets processing necessary for operating as a central unit (CU) in a first device among the two or more devices, and sets processing necessary for operating as a distributed unit (DU) in a second device other than the first device among the two or more devices.

3. The control device according to claim 2, wherein
the processing setting unit further sets processing necessary for operating as a radio unit (RU) in the second device.

4. The control device according to claim 2, wherein
the processing setting unit sets processing necessary for an operation as the RU in a third device among the two or more devices.

5. The control device according to claim 2, wherein
the processing selection unit selects, on a basis of the determined type of the data, one or more kinds of first processing to be executed by the first device from among the processing necessary for operating as the CU and one or more kinds of second processing to be executed by the second device from among the processing necessary for operating as the DU.

6. The control device according to claim 5, further comprising:
a management unit that manages first identification information for identifying each of the plurality of kinds of processing necessary for operating as the base station and second identification information for identifying each of the two or more devices; and
a control information setting unit that sets, on a basis of the determined type of the data, a first association in which the second identification information corresponding to the first device and the first identification information corresponding to the first processing selected by the processing selection unit are associated with each other and a second association in which the second identification information corresponding to the second device and the first identification information corresponding to the second processing selected by the processing selection unit are associated with each other.

7. The control device according to claim 6, further comprising
an information providing unit that provides, to a function of a core network that processes user plane data, the first association and the second association set by the control information setting unit.

8. The control device according to claim 6, further comprising
a notification unit that issues a message for notifying each device of the two or more devices of an instruction, wherein
the processing selection unit separates, from the first processing, third processing which does not depend on the determined type of the data and fourth processing which depends on the determined type of the data, and
the notification unit notifies the first device of an instruction to execute the third processing on the received data by using the message, and notifies the first device of an instruction to execute the fourth processing on the received data by using the first association set by the control information setting unit.

9. A device that operates as a base station, comprising:
an acquisition unit that acquires, from a control device, information regarding setting of a plurality of kinds of processing necessary for operating as the base station, and acquires control information and data generated by a device of a core network that processes user plane data;
a processing setting unit that sets the plurality of kinds of processing on a basis of the information regarding the setting of the plurality of kinds of processing necessary for operating as the base station; and
a processing selection unit that selects, on a basis of the control information, processing to be executed on the data from among the plurality of kinds of processing set by the processing setting unit.

10. The device according to claim 9, wherein
the control information includes first identification information for identifying each of the plurality of kinds of processing, and
the processing selection unit selects, on a basis of the first identification information, the processing to be executed on the data from among the plurality of kinds of processing set by the processing setting unit.

11. The device according to claim 10, wherein
the control information includes second identification information for identifying each of devices in which one or more of the plurality of kinds of processing necessary for operating as the base station are set, and
in a case where the second identification information indicates an own device, the processing selection unit selects, on a basis of the first identification information, the processing to be executed on the data from among the plurality of kinds of processing set by the processing setting unit.

12. The device according to claim 11, wherein
the processing selected by the processing selection unit is executed to generate second data.

13. The device according to claim 9, wherein
the processing setting unit sets processing necessary for operating as a CU.

14. The device according to claim 9, wherein
the processing setting unit sets processing necessary for operating as a DU.

15. The device according to claim 9, wherein
the processing setting unit sets processing necessary for operating as an RU.

16. The device according to claim 11, wherein
the acquisition unit further acquires, from the control device, a message including a set of one or more pieces of the first identification information corresponding to the processing to be executed on the data independently of the control information, and
the processing selection unit further selects one or more kinds of processing corresponding to the first identification information included in the set.

17. The device according to claim 11, wherein
the control information includes third identification information regarding permission to transfer execution of one or more kinds of processing corresponding to the first identification information to another device, the device further comprising:
a device specifying unit that specifies another device in a case where the third identification information corresponding to the processing, which is to be executed on the data, selected by the processing selection unit is information indicating permission of transfer to the another device; and
a control information update unit that updates the second identification information corresponding to the first identification information of the processing included in the control information to second identification information corresponding to the another device specified by the device specifying unit.

18. The device according to claim 9, wherein
the acquisition unit further acquires information necessary for acquiring software that executes the plurality of kinds of processing, and
the processing setting unit acquires and implements the software from another device on a basis of the information necessary for acquiring the software.

19. A control method for causing two or more devices to operate as a base station, the control method comprising:
a determination step of determining a type of data to be transmitted to and received from a terminal device;
a process selection step of selecting, for each device, one or more kinds of processing to be executed by each device of the two or more devices from among a plurality of kinds of processing necessary for operating as the base station on a basis of the determined type of the data; and
a process setting step of setting each device of the two or more devices such that each device of the two or more devices is able to execute, on the received data, the one or more kinds of processing selected on a basis of the type of the data.

20. A processing method which is executed in a device operating as a base station, the method comprising:
an acquisition step of acquiring, from a control device, information regarding setting of a plurality of kinds of processing necessary for operating as the base station, and acquires control information and data generated by a device of a core network that processes user plane data;
a process setting step of setting the plurality of kinds of processing on a basis of the information regarding the setting of the plurality of kinds of processing necessary for operating as the base station; and
a process selection step of selecting, on a basis of the control information, processing to be executed by the device on the data from among the plurality of kinds of processing set by the process setting step.
